Europäisches Patentamt

European Patent Office

Office européen des brevets

(19)

(11) EP 1 530 033 A1

(12) **EUROPEAN PATENT APPLICATION**
published in accordance with Art. 158(3) EPC

(43) Date of publication:
**11.05.2005 Bulletin 2005/19**

(21) Application number: **03784482.6**

(22) Date of filing: **24.07.2003**

(51) Int Cl.⁷: **G01J 3/46**, G06T 1/00,
H04N 1/04, H04N 1/60,
H04N 9/04

(86) International application number:
**PCT/JP2003/009410**

(87) International publication number:
**WO 2004/015381 (19.02.2004 Gazette 2004/08)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **09.08.2002 JP 2002233809**

(71) Applicant: **Hamamatsu Photonics K.K.
Shizuoka-ken 435-8558 (JP)**

(72) Inventors:
• **MATSUMOTO, Kazuji**
 **c/o Hamamatsu Photonics K.K.
 Hamamatsu-shi, Shizuoka 435-8558 (JP)**
• **HARA, Masahiro c/o Hamamatsu Photonics K.K.
 Hamamatsu-shi, Shizuoka 435-8558 (JP)**

(74) Representative: **Frost, Alex John et al
 Boult Wade Tennant,
 Verulam Gardens
 70 Gray's Inn Road
 London WC1X 8BT (GB)**

(54) **SYSTEM FOR MEASURING CHROMATICITY IN VISIBLE AND INVISIBLE REGIONS**

(57) A system 1 comprises: a spectroscopic optical part 2a for spectrally separating emitted light from a subject 10; a photoelectrical conversion part 2b for generating electric signals by photoelectrically converting the respective separated lights; an image processing part 4 for generating a pseudo color image and computing numerical values of a color specification system for performing color display of the image; and image outputting parts 5 and 6 for outputting the above-mentioned image and/or numerical values. The image processing part generates image signals by applying sensitivity functions to the respective electric signals, uses the image signals to compute the above-mentioned numerical values, and applies a matrix M to the image signals to generate a pseudo color image. The sensitivity functions are determined based on a correlation between physical state or chemical state differences among subjects and differences in waveform that occur among optical spectra of a plurality of subjects and M is determined so as to minimize color reproduction errors.

**Fig.1**

**Description**

**Technical Field**

This invention relates to a system enabling the measurement of chromaticity (chromatic value and color specification value) in the visible and invisible ranges.

**Background Art**

Conventional color measurement was a measurement method that was effective only for the visible range, and color measurement covering the invisible range does not exist. However, a similar art called pseudo color display does exist. This will be described below.

An image of invisible light (for example, ultraviolet light of wavelengths in the range of 200nm to 400nm or near-infrared light of wavelengths in the range of 700nm to 2200nm) besides visible light (light of wavelengths in the range of 400 to 700nm), which are contained in emitted light emitted from a subject, contains extremely useful information concerning the physical state or chemical state of the subject that cannot be recognized by the human eye (for example, information concerning the state of decomposition of a food, etc.).

Various examinations have thus been made in order to convert such invisible light image information into image information that can be recognized visually by humans and display it. Since an invisible light image is normally a black-and-white image that cannot be visually recognized readily by a human, an image processing method, which enables the luminance information to be discriminated readily by pseudo color display, is employed.

That is, employed is an image processing method in which the optical spectrum of all of the emitted light including the invisible light emitted from a subject is partitioned into a plurality of wavelength ranges, and then coloring is performed by assigning specific colors, which are visually recognizable by humans and are not isochromatic with respect to each other (for example, the three colors of red, green, and blue), to the partitioned ranges, respectively, thereby generating a pseudo color display image.

This method applies the human eye characteristic that differences in image information can be recognized more readily with a color image than with a black-and-white image. As an example of an image pickup system that performs such pseudo color image display, the color image pickup device disclosed in Japanese Patent Application Laid-Open No. H6-121325 can be cited.

**Disclosure of the Invention**

However, since prior color theories concern only the visible range and were developed from human "sight + sensation characteristic," these theories do not surpass the human "sight + sensation characteristic."

That is, the concept of color values (chromatic value and color specification value) was formed by preparing color standard characteristics (color matching function) based on actual appearance. The existence of such standard characteristic has enabled communication via color values in the visible range.

If, as in the visible range, there were characteristic in the invisible range that could be used as some form of standard like the color matching function used in the visible range, this could be used as standard values to compute accurate color values in the invisible range as well. However, since there are no equivalents to standard characteristic for the invisible range, a color value concept has not been formed for the invisible range and thus a system enabling the display of color values of the invisible range does not exist.

On the other hand, there do exist pseudo color image pickup systems that resemble such a system. With the conventional image pickup systems, the information desired to be acquired from a subject sample could not be adequately evaluated quantitatively by use of the color display of a pseudo color image that is acquired finally.

Here, "the information desired to be acquired from a subject sample" is information concerning physical state or chemical state differences to be observed, which exist between a subject sample and a standard sample representing a subject set to which the subject sample belongs, and differences that can be discriminated optically.

Examples of the above-mentioned physical state differences between a standard sample and a subject sample include differences due to the existence of a structure, such as in cases where a structure that does not exist in a standard sample exists in a subject sample, differences due to the existence of shape characteristics, such as in cases where a shape characteristic that is normally found in a standard sample is not found in a subject sample, and the like.

Examples of the above-mentioned chemical state differences between a standard sample and a subject sample include differences due to the existence of a concentration distribution region of a specific chemical substance, such as in cases where the subject sample has a region in which a chemical substance, which exists only within a certain concentration range in a standard sample, exists at a high concentration that exceeds the above-mentioned range, and the like.

This invention has been made in view of the above problems, and an object thereof is to provide a system enabling chromaticity measurement in the visible and invisible ranges that adequately enables the information desired to be acquired from a subject sample to be adequately evaluated quantitatively by use of color values of the invisible range and color display of a pseudo color image.

However, since prior color theories concern only the visible range and were developed from human "sight + sensation characteristics," these theories do not surpass the human "sight + sensation characteristics."

That is, the concept of color values (chromatic value and color specification value) was formed by preparing color standard characteristic (color matching functions) based on actual perception. The existence of such standard characteristic has enabled communication by use of color values in the visible range.

If, as in the visible range, there were characteristic in the invisible range that could be used as some form of standard like the color matching function used in the visible range, these could be used as standard values to compute accurate color values in the invisible range as well. However, since there are no equivalents to standard characteristic for the invisible range, a color value concept has not been formed for the invisible range and thus a system enabling the display of color values of the invisible range does not exist.

On the other hand, there do exist pseudo color image pickup systems that resemble such a system. With the conventional image pickup systems, the information desired to be acquired from a subject sample could not be adequately evaluated quantitatively by use of the color display of a pseudo color image that is acquired finally.

Here, "the information desired to be acquired from a subject sample" is information concerning physical state or chemical state differences to be observed, which exist between a subject sample and a standard sample representing a subject set to which the subject sample belongs, and differences that can be discriminated optically.

Examples of the above-mentioned physical state differences between a standard sample and a subject sample include differences due to the existence of a structure, such as in cases where a structure that does not exist in a standard sample exists in a subject sample, differences due to the existence of shape characteristics, such as in cases where a shape characteristic that is normally found in a standard sample is not found in a subject sample, and the like.

Examples of the above-mentioned chemical state differences between a standard sample and a subject sample include differences due to the existence of a concentration distribution region of a specific chemical substance, such as in cases where the subject sample has a region in which a chemical substance, which exists only within a certain concentration range in a standard sample, exists at a high concentration that exceeds the above-mentioned range, and the like.

This invention has been made in view of the above problems, and an object thereof is to provide a system enabling chromaticity measurement in the visible and invisible ranges that adequately enables the information desired to be acquired from a subject sample to be adequately evaluated quantitatively by use of color values of the invisible range and color display of a pseudo color image.

As a result of diligent research towards resolving the above issues, the present inventors have found a major factor by which the information desired to be acquired from a subject sample has not being able to be adequately evaluated quantitatively with the above-described conventional image pickup system. The major factor is that the standards for partitioning an optical spectrum of emitted light of all wavelength ranges (ranges including invisible ranges) emitted from a subject sample into a plurality of wavelength ranges are not determined in adequate association with the information desired to be acquired from the subject sample.

The present inventors found another major factor by which the information desired to be acquired from a subject sample has not been able to be adequately evaluated quantitatively with the conventional image pickup system. The major factor is that the coloration standard (the standard for determining the sensitivity function to be used) for performing coloration by allocating specific colors to (applying sensitivity function such as color matching function to) the respective wavelength ranges obtained by partitioning the above-mentioned emitted light spectrum into a plurality of wavelength ranges is also not determined in adequate association with the information desired to be acquired from the subject sample in the conventional image pickup system.

Furthermore, the present inventors found that, by determining the standard for partitioning an optical spectrum of emitted light emitted from a subject sample into a plurality of wavelength ranges, and the standard for determining the sensitivity functions to be used, in adequate association with the information desired to be acquired from the subject sample, a method used for a color specification system for carrying out color display of a color image of visible light can be applied to a pseudo color image. The present inventors thereby found that the color information of a pseudo color image can be quantified numerically as relative values with respect to specific standard associated with the information desired to be acquired from a subject sample and have thereby arrived at the present invention.

That is, this invention provides a system enabling chromaticity measurement in the visible and invisible range, comprising at least: a spectroscopic optical part for receiving emitted light of all wavelength ranges emitted from a subject sample and spectrally separating the above-mentioned emitted light into three or more component lights having mutually different central wavelengths; a photoelectric conversion part for photoelectrically converting the three or more component lights, respectively, and generating three or more electric signals, respectively, corresponding to the three or more component lights; an image processing part for processing the three or more electric signals to generate a pseudo color image of the sample and compute a numerical value defined based on a color specification system for performing color display of the pseudo color image; and an image outputting part for outputting the pseudo color image and/or the numerical value, wherein the image processing part comprises at least: image signal generation processing means for generating three or more basic pseudo color image signals by applying three or more sensitivity functions independently to all of the three or more electric signals; vector conversion processing means for generating the three or more pseudo color image signals by performing vector conversion by applying a matrix M to the three or more basic pseudo color image signals; image formation processing means for generating the pseudo color image by synthesizing the three or more pseudo color image signals; and color specification processing means for computing the numerical value defined based on the color specification system by use of the three or more pseudo color image signals, and wherein the three or more sensitivity functions are determined based on a correlation between physical state or chemical state differences to be observed that occur among respective subjects constituting up a subject set to which the subject sample belongs, and differences in waveform occurring among optical spectra of the respective subjects constituting the subject set. The matrix M is a matrix for approaching optimal sensitivity characteristics and is determined so that, in consequence, the color reproduction error that is generated when generating the three or more pseudo color image signals is minimized.

Here, "a subject of the same type" as a subject sample in a subject set to which the subject sample belongs refers to a subject belonging to the same category as the subject sample that is subject to measurement. Furthermore, here, the "category" is determined in accordance with whether or not there exists an optically discriminable difference between the optical spectra obtained, respectively, from a standard sample and the subject sample in terms of obtaining the information desired to be acquired from the subject sample. If the above difference exists, the subjects can be deemed as belonging to the same category.

Thus, for example, if the subject sample is a specific variety of apple, whether the category should be limited down to this specific variety or should not be limited down to the specific variety but be defined as "apple" or as "fruit" may be determined in accordance with the information desired to be acquired from the subject sample.

As mentioned above, with this invention's system enabling chromaticity measurement in the visible and invisible range, three or more sensitivity functions are determined based on the correlation between the physical state or chemical state differences to be observed that occur among respective subjects constituting the subject set to which the subject sample belongs, and the differences in waveform occurring among the optical spectra of the respective subjects constituting the subject set. The signals, which are obtained by applying three or more sensitivity functions, respectively, and independently to the electrical signals obtained by photoelectric conversion of the optical spectrum measured from the subject sample belonging to the subject set, are thus closely associated with the information desired to be acquired from the subject sample.

The color information constituting the pseudo color image obtained finally is thus closely associated with the information desired to be acquired from the subject sample. With the present invention, since the color information of the pseudo color image obtained finally can be quantified numerically by a method used in a color specification system for carrying out color display of visible light color images, the numerically quantified color information of the pseudo color information are closely associated with the information desired to be acquired from the subject sample. Consequently, with the present invention, the information desired to be acquired from a subject sample can be adequately evaluated quantitatively using the color display of the pseudo color image.

Also, with the present invention, even in a case where pseudo color image is output separately by image outputting parts (monitors or printers) or the like, which differ in pseudo color image display conditions and the color display states of these pseudo color images are recognized as being different in terms of color sensation or color perception, the information desired to be acquired from a subject sample can be ascertained accurately in the form of numerical values defined based on the color specification system.

This invention also provides a system enabling chromaticity measurement in the visible and invisible range, comprising at least: a spectroscopic optical part for receiving emitted light of all wavelength ranges emitted from a subject sample and spectrally separating the above-mentioned emitted light into three or more component lights having mutually different central wavelengths; wavelength conversion optical parts which are provided, respectively, for each of said three or more component lights and generates three or more pseudo color component lights corresponding to the three or more component lights respectively by performing wavelength conversion of each of the three or more component lights and thereby optically applying sensitivity functions to each of the three or more component lights; a photoelectric conversion part for photoelectrically converting the three or more pseudo color component lights respectively and thereby generating three or more basic pseudo color image signals respectively corresponding to the three or more pseudo color component lights; an image processing part for processing the three or more basic pseudo color image signals to generate a pseudo color image of the sample and calculate a numerical value defined based on a color specification system for performing color display of the pseudo color image; and image outputting part for outputting the pseudo color image and/or the numerical value, wherein the image processing part comprises at least:

vector conversion processing means for generating the three or more pseudo color image signals by performing vector conversion by applying a matrix M to the three or more basic pseudo color image signals; image formation processing means for generating the pseudo color image by synthesizing the three or more pseudo color image signals; and color specification processing means for calculating the numerical value defined based on the color specification system by use of the three or more pseudo color images, and wherein the three or more sensitivity functions are determined based on a correlation between physical state or chemical state differences to be observed that occur among respective subjects constituting a subject set to which the subject sample belongs, and differences in waveform occurring among optical spectra of the respective subjects constituting the subject set, and the matrix M is a matrix for approaching optimal sensitivity characteristic and is determined so that, in consequence, the color reproduction error that is generated when generating the three or more pseudo color image signals is minimized.

Even in the case of such a system enabling chromaticity measurement in the visible and invisible ranges having an arrangement of a type in which sensitivity functions are applied spectroscopically using an optical filter or other optical system as described above, the information desired to be acquired from a subject sample can be adequately evaluated quantitatively using the color display of the pseudo color image as in the case of the formerly described system enabling chromaticity measurement in the visible and invisible ranges having an arrangement in which sensitivity functions are applied by numerical calculation.


**Brief Description of the Drawings**


Fig. 1 is an explanatory diagram showing the basic configuration of a first embodiment of a system enabling chromaticity measurement in the visible and invisible ranges of the present invention.

Fig. 2 is a flowchart for describing the operations of the system enabling chromaticity measurement in the visible and invisible ranges shown in Fig. 1.

Fig. 3 is a flowchart for describing the operations of the system enabling chromaticity measurement in the visible and invisible ranges shown in Fig. 1.

Fig. 4 is a flowchart for describing the operations of the system enabling chromaticity measurement in the visible and invisible ranges shown in Fig. 1.

Fig. 5 is a flowchart for describing the operations of the system enabling chromaticity measurement in the visible and invisible ranges shown in Fig. 1.

Fig. 6 is a diagram showing a display example of an image output to an image outputting part by the system enabling chromaticity measurement in the visible and invisible ranges shown in Fig. 1.

Fig. 7 is a diagram showing a display example of an image output to the image outputting part by the system enabling chromaticity measurement in the visible and invisible ranges shown in Fig. 1.

Fig. 8 is a diagram showing a display example of an image output to the image outputting part by the system enabling chromaticity measurement in the visible and invisible ranges shown in Fig. 1.

Fig. 9 is a diagram showing a display example of an image output to the image outputting part by the system enabling chromaticity measurement in the visible and invisible ranges shown in Fig. 1.

Fig. 10 is a diagram showing a display example of an image output to the image outputting part by the system enabling chromaticity measurement in the visible and invisible ranges shown in Fig. 1.

Fig. 11 is a diagram showing a display example of an image output to the image outputting part by the system enabling chromaticity measurement in the visible and invisible ranges shown in Fig. 1.

Fig. 12 is a diagram showing a display example of an image output to the image outputting part by the system enabling chromaticity measurement in the visible and invisible ranges shown in Fig. 1.

Fig. 13 is a diagram showing a display example of an image output to the image outputting part by the system enabling chromaticity measurement in the visible and invisible ranges shown in Fig. 1.

Fig. 14 is a diagram showing a display example of an image output to the image outputting part by the system enabling chromaticity measurement in the visible and invisible ranges shown in Fig. 1.

Fig. 15 is a flowchart for describing an example of a method of determining optimal sensitivity functions to be used in an image signal generation process in an image processing part of the system enabling chromaticity measurement in the visible and invisible ranges shown in Fig. 1.

Fig. 16 is a flowchart for describing an example of a method of determining an optimal matrix M to be used in a vector conversion process in the image processing part of the system enabling chromaticity measurement in the visible and invisible ranges shown in Fig. 1.

Fig. 17 is an explanatory diagram showing the basic configuration of a second embodiment of a system enabling chromaticity measurement in the visible and invisible ranges of the present invention.

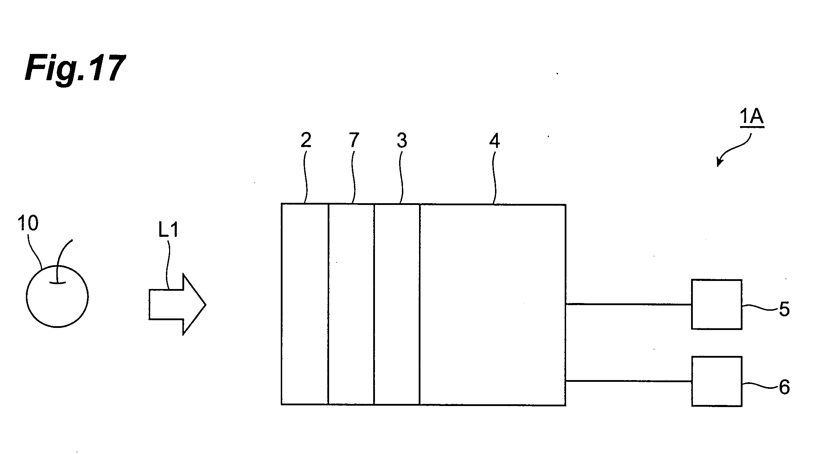

Fig. 18 is a flowchart for describing the operations of the system enabling chromaticity measurement in the visible

**EP 1 530 033 A1**

and invisible ranges shown in Fig. 17.

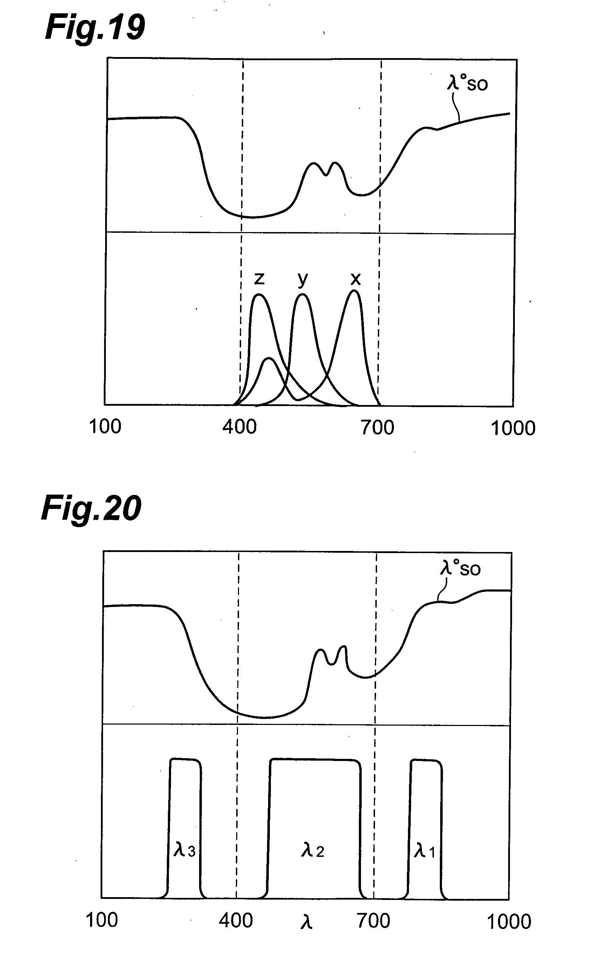

Fig. 19 shows graphs of examples of sensitivity functions used in an image signal generating process in an image processing part of the system enabling chromaticity measurement in the visible and invisible ranges of the present invention.

Fig. 20 shows graphs of examples of sensitivity functions used in an image signal generating process in an image processing part of the system enabling chromaticity measurement in the visible and invisible ranges of the present invention.

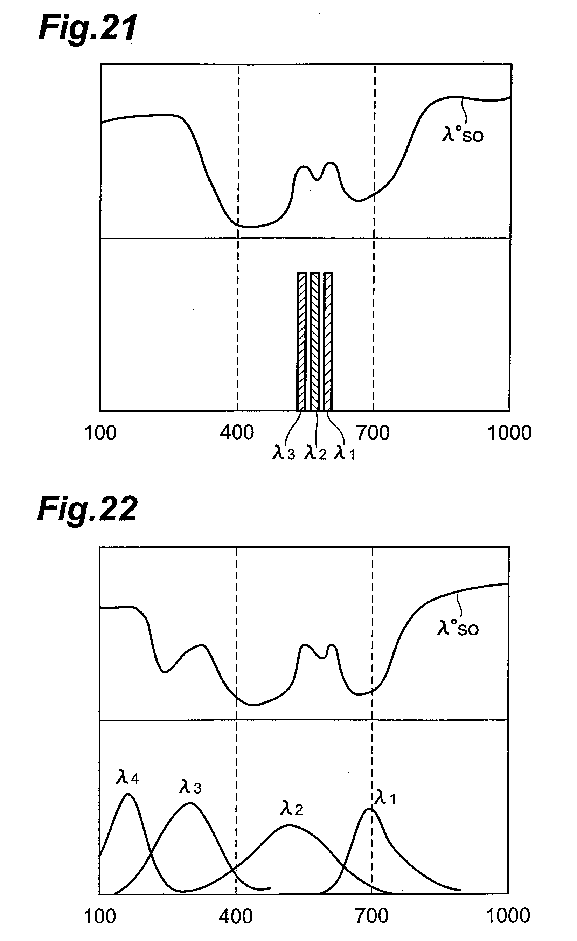

Fig. 21 shows graphs of examples of sensitivity functions used in an image signal generating process in an image processing part of the system enabling chromaticity measurement in the visible and invisible ranges of the present invention.

Fig. 22 shows graphs of examples of sensitivity functions used in an image signal generating process in an image processing part of the system enabling chromaticity measurement in the visible and invisible ranges of the present invention.

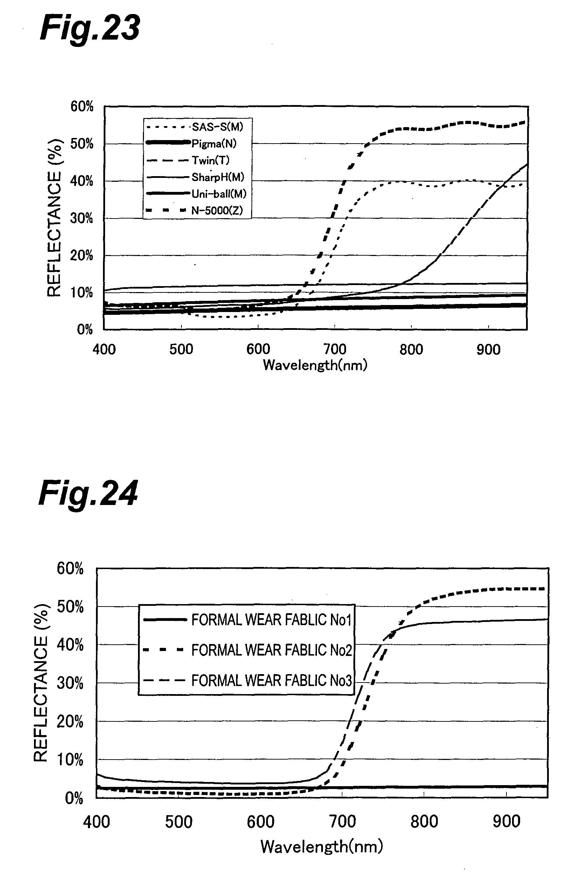

Fig. 23 is a graph showing the reflectance profiles of respective samples measured by a system enabling chromaticity measurement in the visible and invisible ranges of an Example 1.

Fig. 24 is a graph showing the reflectance profiles of respective samples measured by the system enabling chromaticity measurement in the visible and invisible ranges of Example 1.

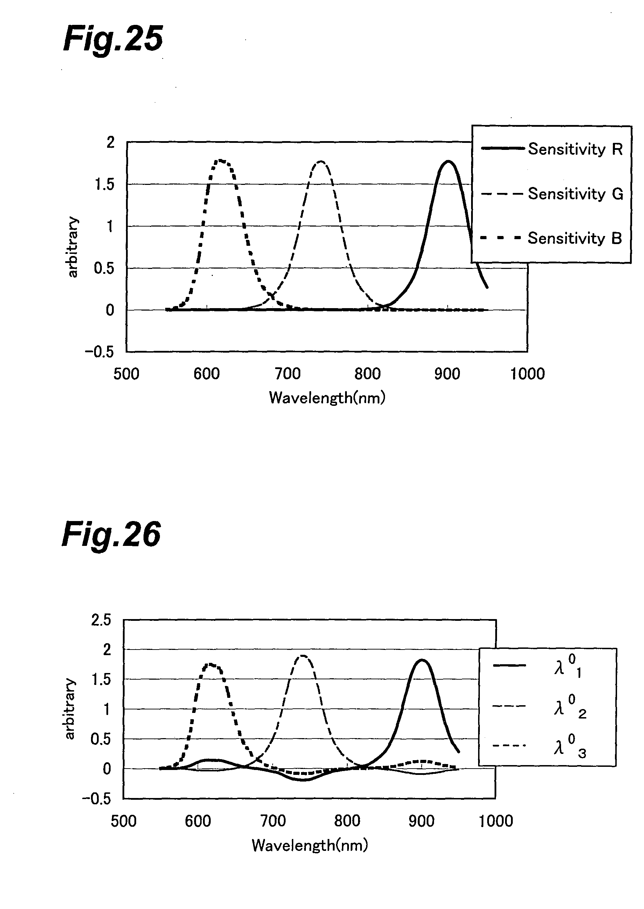

Fig. 25 is a graph showing the profiles of (positive-only) sensitivity functions determined by the system enabling chromaticity measurement in the visible and invisible ranges of Example 1.

Fig. 26 is a graph showing the profiles of optimal sensitivity functions (ideal sensitive characteristics) determined by the system enabling chromaticity measurement in the visible and invisible ranges of Example 1.

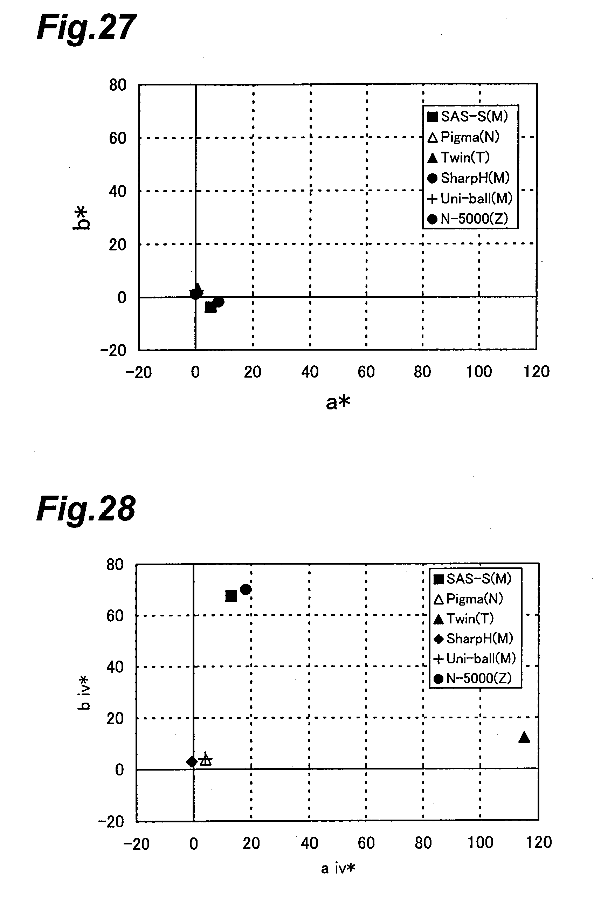

Fig. 27 is a graph illustrating the relationship between the a* values and b* values of the L*a*b* color specification system that were determined for respective samples by the system enabling chromaticity measurement in the visible and invisible ranges of Example 1.

Fig. 28 is a graph illustrating the relationship between $a_{iv}$* values and $b_{iv}$* values of an $L_{iv}$*$a_{iv}$*$b_{iv}$* color specification system that were determined by the system enabling chromaticity measurement in the visible and invisible ranges of Example 1.

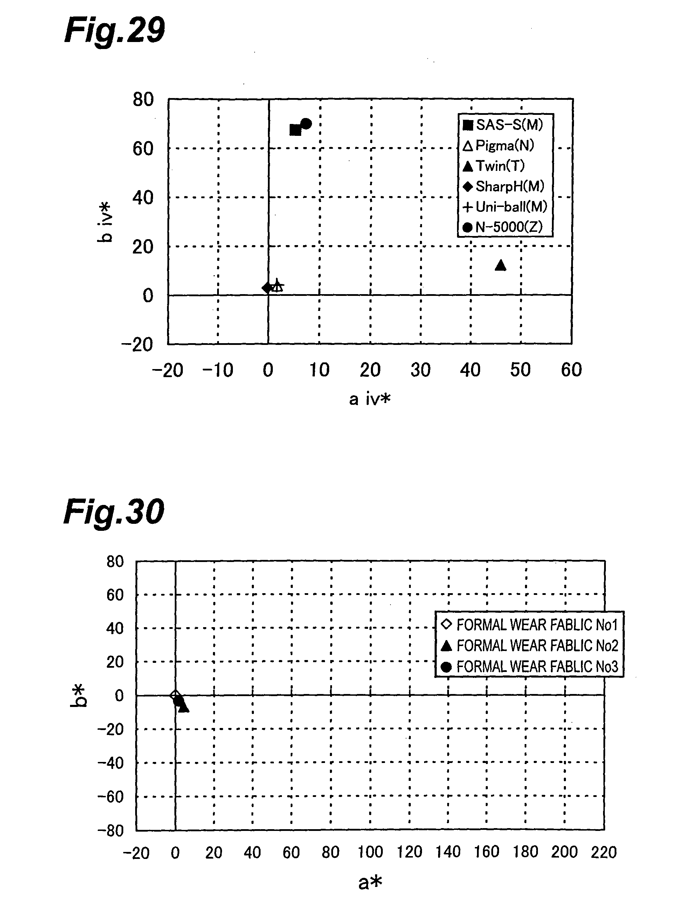

Fig. 29 is a graph illustrating the relationship between the $a_{iv}$* values and $b_{iv}$* values of the $L_{iv}$*$a_{iv}$*$b_{iv}$* color specification system that were determined by the system enabling chromaticity measurement in the visible and invisible ranges of Example 1.

Fig. 30 is a graph illustrating the relationship between the a* values and b* values of the L*a*b* color specification system that were determined for respective samples by the system enabling chromaticity measurement in the visible and invisible ranges of Example 1.

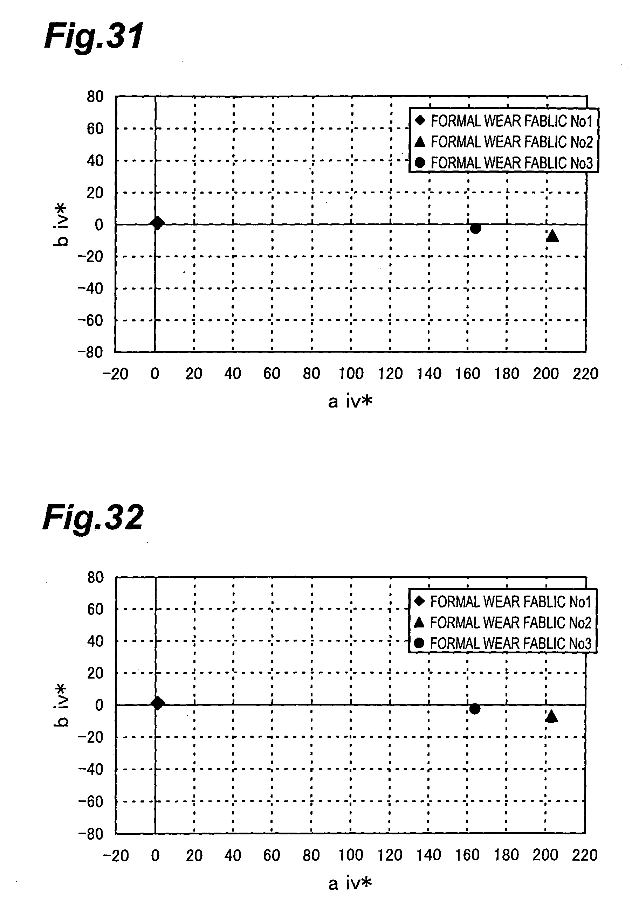

Fig. 31 is a graph illustrating the relationship between the $a_{iv}$* values and $b_{iv}$* values of the $L_{iv}$*$a_{iv}$*$b_{iv}$* color specification system that were determined by the system enabling chromaticity measurement in the visible and invisible ranges of Example 1.

Fig. 32 is a graph illustrating the relationship between the $a_{iv}$* values and $b_{iv}$* values of the $L_{iv}$*$a_{iv}$*$b_{iv}$* color specification system that were determined by the system enabling chromaticity measurement in the visible and invisible ranges of Example 1.

**Best Modes for Carrying Out the Invention**

A preferred embodiment of this invention's system enabling chromaticity measurement in the visible and invisible ranges shall now be described in detail with reference to the drawings. In the following description, the same or equivalent parts will be denoted by the same symbols and redundant description will be omitted.

[First Embodiment]

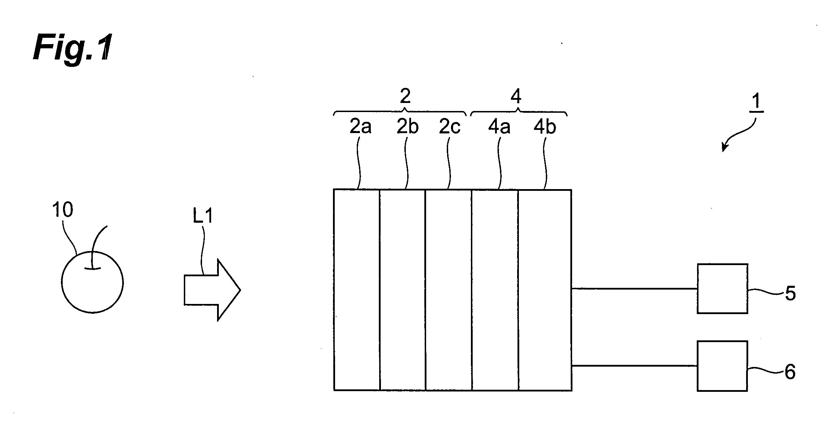

Fig. 1 is an explanatory diagram showing the basic configuration of a first embodiment of a system enabling chromaticity measurement in the visible and invisible ranges of the present invention. As shown in Fig. 1, the system 1 enabling chromaticity measurement in the visible and invisible ranges of the first embodiment comprises a camera part 2, an image processing part 4, and a monitor 5 and a printer 6, which serve as image outputting parts. The camera part 2 has a spectroscopic optical part 2a, a photoelectric conversion part 2b, and an A/D conversion part 2c. A preprocessing part 4a of the image processing part 4, to be described later, may be integrated to the camera part 2.

The spectroscopic optical part 2a receives emitted light L1 of all wavelength ranges emitted from a subject sample and spectrally separates this emitted light into three or more component lights having central wavelengths that differ from each other. Though this spectroscopic optical part 2a is not limited as long as it has an arrangement enabling the generation of the above-mentioned three or more component lights having central wavelengths that differ from each other, it is preferable that the spectroscopic optical part 2a has an arrangement enabling spectral separation into 16 or more component lights in the case where a spectroscopic process is to be applied because the sensitivity characteristics can be reset by use of sensitivity functions described below.

As such a spectroscopic optical part 2a, interference filters and an optical fiber plate (neither are illustrated), which are mounted in a spectroscopic imaging sensor disclosed in Japanese Patent Publication No. 2713838, are especially preferable. Whereas in Japanese Patent Publication No. 2713838, the use of the interference filters and optical fiber plate is described for cases of handling mainly visible colors, in the application to spectroscopic optical part 2a of the present embodiment, there is a difference in that the interference filters and the optical fiber plate are to provided not just for the visible range but for the entire wavelength range of electromagnetic waves.

That is, as the interference filters and optical fiber plate for spectroscopic optical part 2a, a spectroscopic filter in which at least 16 interference filters are arranged as a set and a plurality of such sets are arrayed two-dimensionally, and an optical fiber plate being formed by integrating a plurality of optical waveguides which are optically coupled respectively and independently to the interference filters, are preferable.

The photoelectric conversion part 2b performs respective photoelectric conversion of the three or more component lights generated by the spectroscopic optical part 2a and generates three or more electrical signals respectively corresponding to the three or more component lights. More specifically, the photoelectric conversion part 2b comprises, for example, a plurality of light receiving elements (not shown) which are optically coupled respectively and independently to the respective light emitting ends of the optical waveguides of the optical fiber plate.

Also, each of the above-mentioned light receiving elements is arranged as a set comprising a photoelectric transducer (not shown), which generates charges in accordance with the input light intensity, and a switch element (not shown), which is connected to a signal output terminal of the photoelectric transducer and outputs the charges accumulated in the photoelectric transducer in response to a scan signal from the image processing part.

Furthermore, as a specific arrangement of a combination in which the above-described spectroscopic optical part 2a and photoelectric conversion part 2b are integrated, the spectroscopic image sensor described in Japanese Patent Publication No. 2713838 is preferable. This spectroscopic imaging sensor has an arrangement in which the A/D conversion part 2c and preprocessing part 4a are integrated.

The A/D conversion part 2c has an amp (not shown), equipped with an integrating circuit which converts the charges (current signals) output from the respective light receiving elements into voltage signals individually, and an A/D converter (not shown), converting the voltage signals (analog values) output from the amp into digital values and outputting the digital values.

Though, in regard to specific arrangements of the camera part 2 besides the above-described arrangement, there are no restrictions as long as the arrangements can perform continuous acquisition of narrow-band images spectrally separated, an arrangement described in Japanese Patent Application Laid-Open No. H2-226027 can be cited as another preferable form. The camera part 2 may have the arrangement equipped in a so-called single-plate, three-plate, or four-plate type camera.

In this case, the spectroscopic optical part 2a has the same arrangement as that of a normal camera that receives emitted light L1 of all wavelength ranges emitted from a subject sample and performs spectral separation, for example, into three or more (or four or more) component lights having mutually different central wavelengths. Whereas the aforementioned camera part 2 having the spectroscopic imaging type arrangement is suited for the case of use for the purpose of sampling narrow bands and observing fine spectral characteristics, the present camera 2 with the arrangement of a so-called single-plate, three-plate, or four-plate type camera is suited for the case of use of sampling and observing images of wider band characteristics (for example, with half-width values of no less than 80nm).

In the camera part 2 with the arrangement of a so-called single-plate, three-plate, or four-plate type camera, the preprocessing part 4a, which shall be described later and is provided for the purpose of applying sensitivity functions, is eliminated and the data are sent directly to the main unit part 4b of the image processing part 4.

Also, besides the camera part 2 of the above-described arrangements, the camera part 2 with an arrangement in which interference filters are arranged on a turret and rotated to take in bandpass images successively, such as a "two-dimensional colorimetry system" which is described in Color Forum Japan 95, pp. 91-94, may be equipped.

Monitor 5 and printer 6, which serve as image outputting parts, respectively, output pseudo color images formed by image processing part 4, and/or numerical values defined based on a color specification system. Furthermore, monitor 5 and printer 6 are, respectively, equipped with a D/A converter (not shown) for generating analog signals by D/A conversion of signals based on numerical values for the color display of basic pseudo color image signals (referred to as "raw invisible color images (signals)" in the description of operations given below) and pseudo color image signals (referred to as "basic invisible color images (signals)" in the description of operations given below), which are generated by the image processing part 4 to be described below, and sending these analog signals to monitor 5 and/or printer 6. The camera part 2 and image processing part 4 may be integrated as a unit or may be separated and the form thereof is not limited.

The image processing part 4 is mainly comprised of the preprocessing part 4a which executes a preprocess of applying sensitivity functions to the three or more digital signals (three or more electric signals) output from camera part 2, and the main unit part 4b which executes process subsequent the preprocess. The image processing part 4 is also equipped with a central control unit (not shown) for controlling preprocessing part 4a and main unit part 4b, generating a pseudo color image by processing and converting the three or more digital signals output from camera part 2 into pseudo color image signals, and computing numerical values that are defined based on the color specification system for performing color display of the pseudo color image.

This central control unit has a CPU, a ROM, and a RAM (none of which are shown). The CPU of the central control unit comprises a microprocessor, etc., and performs the various computing processes (image signal generation process (preprocess), vector conversion process, image forming process, color specification process, process for determining sensitivity functions, process for determining a matrix M, and control of the entire system enabling chromaticity measurement in the visible and invisible range) to be described below.

Programs for the various processes mentioned above are stored in advance in the ROM of the central control unit, and the RAM is used for reading and writing various data in the control and computation processes. The central control unit furthermore has input/output ports (not shown), which are connected to the CPU.

Various components of the camera part 2 are electrically connected to these input/output ports via control circuits for controlling the various components. The monitor 5 and printer 6 are also connected independently to the input/output ports via control circuits that control the D/A converters. The camera part 2, monitor 5, and printer 6 are thus provided, via the input/output ports, with various signals, etc., that are generated by the computing processes of the CPU.

The central control unit also has a storage device (not shown), and this storage device is connected via the input/output ports to the CPU. The CPU controls the various processes of the system 1 enabling chromaticity measurement in the visible and invisible ranges by accessing the storage device and using, as necessary, data, such as those described below, which are stored in the storage device.

That is, stored in this storage device are data for generating, in the image signal generation process to be described below, three or more basic pseudo color image signals by application, in the preprocess at preprocessing part 4a, of three or more sensitivity functions independently to all of the three or more digital signals (three or more electric signals) output from camera part 2.

Also, stored in the storage device are data for generating, in the vector conversion process to be described below, three or more pseudo color image signals by vector conversion by application of matrix M to the three or more basic pseudo color image signals that are output after the image signal generation process.

Furthermore, stored in the storage device are data for generating, in the image forming process to be described below, a pseudo color image by synthesis of the three or more pseudo color image signals output by the vector conversion process.

Also, stored in the storage device are data for computing, in the color specification process to be described below, the numerical values, defined based on the color specification system, by carrying out a numerical calculation process using the three or more pseudo color image signals output from the vector conversion process.

Furthermore, stored in the storage device are data for determining, in the process for determining the sensitivity functions to be described below, the three or more sensitivity functions based on a correlation between physical state or chemical state differences to be observed that occur between a standard sample, which represents a sample set, and the subject sample and differences between the standard waveform of an optical spectrum of the standard sample and the waveform of an optical spectrum of the sample.

Also, stored in the storage device are data for determining the matrix M, in the matrix M determining process to be described below, so that it reduces the color reproduction errors that occur in the process of generating the three or more pseudo color image signals and approaches optical characteristics.

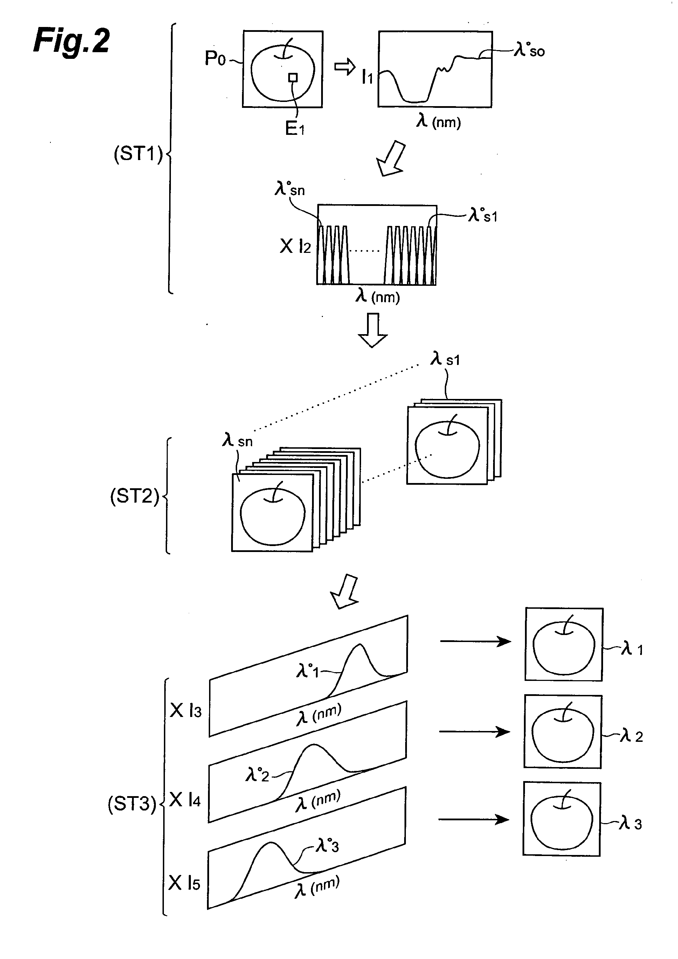

The operations of the system 1 enabling chromaticity measurement in the visible and invisible range will be described with reference to the flowcharts shown in Fig. 2 to Fig. 5. First, the main power supply (not shown) of the system 1 enabling chromaticity measurement in the visible and invisible range is turned ON to activate the image processing part 4. The CPU of the central control unit of the image processing part 4 then outputs drive signals to the camera part 2, monitor 5, and printer 6.

As the hardware arrangement, the camera part 2 may be arranged as a separate unit, the image processing part 4 may be arranged from a normal, commercially-available personal computer, software for controlling the above-mentioned calculation and processing functions of this invention, and additional hardware, and commercially available units may be used as the monitor 5 and printer 6.

In the following description of the operations, the "basic pseudo color image signals" will be referred to as "raw invisible color images (signals)." Also, the "pseudo color image signals" will be referred to as "basic invisible color images (signals)."

First, emitted light L1 of all wavelength ranges emitted from the subject sample 10 is received by the spectroscopic optical part 2a. An entire image $P_0$ or a partial region E1 of the subject sample 10 may be received as the image received at this point. A continuous emission spectrum $\lambda^0_{S0}$ of the received image is decomposed into n (n $\geq$ 3) component lights having mutually different central wavelengths, $\lambda^0_{S1}$, $\lambda^0_{S2}$, ... $\lambda^0_{Sn}$, by means of n (n $\geq$ 3) optical filters (ST1). Here, emitted light L1 is not limited in particular and, for example, may be transmitted light that has been transmitted through the subject sample 10 or reflected light from the subject sample 10.

Next, at the photoelectric conversion part 2b, the n component lights having mutually different central wavelengths $\lambda^0_{S1}$, $\lambda^0_{S2}$, ... $\lambda^0_{Sn}$, are, respectively, converted photoelectrically and converted, via A/D conversion part 2c, into n (n $\geq$ 3) digitized bandpass images (signals) $\lambda_{S1}$, $\lambda_{S2}$, ... $\lambda_{Sn}$, corresponding to the n component lights (ST2).

The n (n $\geq$ 3) bandpass images signals $\lambda_{S1}$, $\lambda_{S2}$, ... $\lambda_{Sn}$ are then input into and processed at the image processing part 4. First, the image signal generation process (preprocess) is carried out. That is, three sensitivity functions $\lambda^0_1$, $\lambda^0_2$, and $\lambda^0_3$, which are determined in advance in accordance with the information desired to be acquired from the subject sample, are applied independently to all of the n (n $\geq$ 3) bandpass images (signals) $\lambda_{S1}$, $\lambda_{S2}$, ... $\lambda_{Sn}$ to form three raw invisible color images (signals) $\lambda_1$, $\lambda_2$, and $\lambda_3$ (ST3).

Though the case where three sensitivity functions are used is described here, the number of sensitivity functions used is not restricted in particular as long as it is no less than three, and an optimal number may be determined in accordance with the information desired to be acquired from the subject in the process of determining the sensitivity functions to be described below.

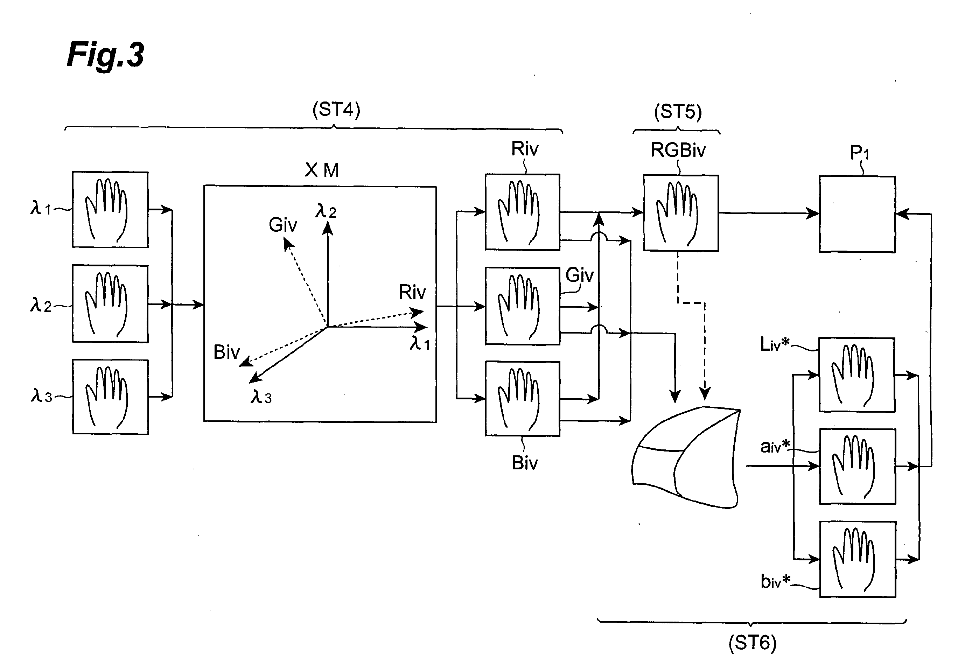

Then, as shown in Fig. 3, the vector conversion process is applied to the three raw invisible color images (signals) $\lambda_1$, $\lambda_2$, and $\lambda_3$ and three basic invisible color images (signals) $R_{iv}$, $G_{iv}$, and $B_{iv}$ are thereby formed (ST4). That is, the three basic invisible color images (signals) $R_{iv}$, $G_{iv}$, and $B_{iv}$ are formed by applying the matrix M to the three raw invisible color images (signals) $\lambda_1$, $\lambda_2$, and $\lambda_3$ as shown in Equation (1) below.

In this process, vector conversion is applied the intensities of all pixels of the three raw invisible color images (signals) $\lambda_1$, $\lambda_2$, and $\lambda_3$ to generate the basic invisible color images (signals) $R_{iv}$, $G_{iv}$, and $B_{iv}$.

$$[R_{iv}\ G_{iv}\ B_{iv}] = [\lambda_1\ \lambda_2\ \lambda_3]M \tag{1}$$

This vector conversion process is carried out firstly for the following purpose. That is, this process is carried out in order to determine the sensitivity functions for the entire processing system by determining the sensitivity functions (ideal sensitivity characteristics), which will be described below, by use of the camera part 2 (or a spectroscope having another arrangement) having a spectroscopic imaging sensor type arrangement or the like, and thereafter using these sensitivity functions (ideal sensitivity characteristics) in (ST3).

In the case where the camera part 2 has the so-called single-plate, three-plate, or four-plate type arrangement, though the optical characteristics thereof are determined using the determined sensitivity functions, only positive-only sensitivity characteristics can be prepared in this case by the determination of the sensitivity functions by the optical filters. Thus, if the obtained optimal sensitivity functions contain negative parts, conversion from the positive-only sensitivity functions to sensitivity functions containing negative parts must be carried out. In this case, the vector conversion process using matrix M is used for the conversion.

Here, the matrix M, which is used in the vector conversion process, is preferably determined as follows. That is, when the optimal sensitivity functions (ideal sensitivity characteristics) have been determined as shall be described below, the M can be applied to the sensitivity characteristics, having only positive characteristics, so as to match the optimal sensitivity characteristics and thereby approach the optimal sensitivity characteristics.

As a method for this, by using sensitivity characteristics, close to the positive-only optimal sensitivity functions that can be prepared actually, to perform color value calculation on a plurality of arbitrary optical spectra of wavelength ranges to be measured (to be specific, raw invisible color images (signals) $\lambda_1$, $\lambda_2$, and $\lambda_3$ are multiplied by a standard vector (unit vector) to determine basic invisible color images (signals) $R_{iv}$, $G_{iv}$, and $B_{iv}$ and the same calculation equations for invisible color value image signals $L_{iv}^*$, $a_{iv}^*$, and $b_{iv}^*$ are used) and meanwhile performing color value calculation based on the obtained optimal sensitivity functions as shall be described later, and determining M so that the color difference set (color reproduction errors) of the two calculation results will be minimized, the positive-only sensitivity characteristics can be made to approach the ideal sensitivity characteristics as a result.

This vector conversion process is second carried out for the following purpose. That is, the process is carried out to perform color correction so that when the invisible image is viewed with the human eyes, the pseudo color image will be acceptable psychologically and mentally. Matrix M is a 3 * 3 matrix (3-row by 3-column) matrix, and for example, when matrix M is a unit matrix, no conversion is carried out and the input values and the output values after conversion will be of exactly the same intensity ratios. By applying M to the three raw invisible color image signals $\lambda_1$, $\lambda_2$, and $\lambda_3$, vector conversion aimed at carrying out contrast control or color (hue) rotation, etc., on basic invisible color image signals $R_{iv}$, $G_{iv}$, and $B_{iv}$ is enabled. Consequently, contrast control or color (hue) rotation, etc., of a pseudo color image $RGB_{iv}$, which is synthesized from basic invisible color image signals $R_{iv}$, $G_{iv}$, and $B_{iv}$, is enabled.

Though in Fig. 3, the subject sample 10 in Fig. 1 and Fig. 2 is illustrated upon being changed (the "apple" in Fig. 1 and Fig. 2 is changed to a "hand palm"), it shall be deemed that in the actual series of processes of the system 1 enabling chromaticity measurement in the visible and invisible ranges, the processes are carried out on the same subject sample 10. That is, when the subject sample 10 is an "apple," the series of processes are carried on the "apple," while when the subject sample 10 is a "hand palm," the series of processes are carried out on the "hand palm."

The pseudo color image $RGB_{iv}$ is then synthesized from basic invisible color images (signals) $R_{iv}$, $G_{iv}$, and $B_{iv}$ by the image forming process (ST5). The pseudo color image $RGB_{iv}$ can be assigned to respective conventional light emitters of RGB and can be displayed on the display of the monitor 5. Though the basic invisible color images (signals) and the pseudo color image are normally in a one-to-one correspondence, adjustment may be necessary depending on the type of the light emitters of the display of the monitor 5.

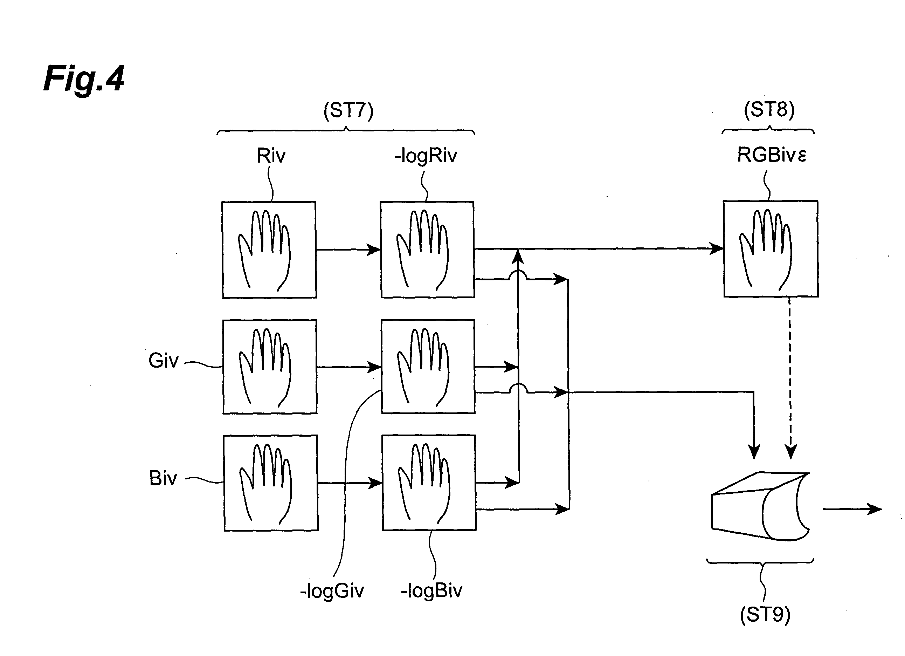

Also, in this image forming process, pseudo absorption color images (signals), based on absorbance, may be determined for the basic invisible color images (signals) $R_{iv}$, $G_{iv}$, and $B_{iv}$ as shown in Fig. 4 (ST7) and these may be used to form a pseudo absorption color image, based on absorbance (ST8). Here, the invisible absorption color images (signals) based on absorbance are expressed as "$-\log R_{iv}$," "$-\log G_{iv}$," and "$-\log B_{iv}$." By synthesizing these, a pseudo color absorption image $RGB_{iv}\varepsilon$, based on absorbance, can be displayed. As an alternative to the expression by means of "$-\log R_{iv}$," "$-\log G_{iv}$," and "$-\log B_{iv}$", the invisible absorption color images (signals) based on absorbance may expressed as "$(1 - R_{iv})^2/2R_{iv}$," "$(1 - G_{iv})^2/2G_{iv}$," and "$(1 - B_{iv})^2/2B_{iv}$," using functions, such as the Kubelka Munk functions, etc., that express absorbance with scattering being taken into consideration (not shown).

Displays using these invisible absorption color images (signals) based on absorbance and the pseudo absorption color image based on absorbance are effective in that the degree of absorption can be displayed as an intensity parameter, for example, in a case where an image of a sample (for example, chlorophyll in plants), having a specific absorption band within a certain wavelength band, is taken.

Furthermore, the color specification process is performed in parallel to this image forming process (ST6). That is, numerical values, defined based on a color specification system for performing a color display, are calculated.

This color specification process is a process for the purpose that process, which is carried out as a color process in the visible light range, is applied to the basic invisible color images (signals) $R_{iv}$, $G_{iv}$, and $B_{iv}$ or pseudo color image $RGB_{iv}$, which is the synthetic image of these images, to determine numerical values on a color solid of the basic invisible color images (signals) $R_{iv}$, $G_{iv}$, and $B_{iv}$ or pseudo color image $RGB_{iv}$, which contain or contains invisible information. In this process, the basic invisible color images (signals) $R_{iv}$, $G_{iv}$, and $B_{iv}$ or pseudo color image $RGB_{iv}$, which contain or contains invisible information, are or is used in place of a color image containing only visible information to express and evaluate the basic invisible color images (signals) $R_{iv}$, $G_{iv}$, and $B_{iv}$ as numerical values on the coordinates of the color solid arranged from lightness, saturation, and hue, which is close to human sense.

Before describing the color specification process, for the sake of simplicity, the CIE Lab method (L*a*b* color specification system), which is a basic color conversion, shall be described as an example of a process that is carried out as a color process in the visible light range. If the input values of an image are X, Y, and Z, and 100% reflectance, 100% transmittance, or the energy value of 100% is expressed by Xn, Yn, and Zn (factors that differ according to the light source characteristics), L*, a*, and b* can be expressed by the following Equations (2) to (4).

$$L^* = 116\left(\frac{X}{X_n}\right)^{1/3} - 16 \qquad \cdots (2)$$

$$a^* = 500\left[\left(\frac{X}{X_n}\right)^{1/3} - \left(\frac{Y}{Y_n}\right)^{1/3}\right] \qquad \cdots (3)$$

$$b^* = 200\left[\left(\frac{Y}{Y_n}\right)^{1/3} - \left(\frac{Z}{Z_n}\right)^{1/3}\right] \qquad \cdots (4)$$

Here, the respective coefficients and constants in Equations (2) to (4) are effective only in the case of color display in L*a*b* space (only in regard to images in the visible range) and will be meaningless coefficients when, for example, the wavelength range of measurement is an invisible range, such as the near infrared range, etc.

In contrast to these Equations (2) to (4), in the color specification process of the system 1 enabling chromaticity measurement in the visible and invisible range of the present embodiment, $L^*_{iv}$, $a^*_{iv}$, and $b^*_{iv}$, expressed by the following Equations (5) to (7), are defined and used as numerical values on a color solid of the basic invisible color images (signals) $R_{iv}$, $G_{iv}$, and $B_{iv}$ or pseudo color image $RGB_{iv}$, which contain or contains invisible information.

$$L_{iv}^* = K_l \left( \frac{G_{iv}}{G_{iv\,n}} \right)^{1/3} \qquad \cdots (5)$$

$$a_{iv}^* = K_a \left[ \left( \frac{R_{iv}}{R_{iv\,n}} \right)^{1/3} - \left( \frac{G_{iv}}{G_{iv\,n}} \right)^{1/3} \right] \qquad \cdots (6)$$

$$b_{iv}^* = K_b \left[ \left( \frac{G_{iv}}{G_{iv\,n}} \right)^{1/3} - \left( \frac{B_{iv}}{B_{iv\,n}} \right)^{1/3} \right] \qquad \cdots (7)$$

Here, in Equations (5) to (7), of the values $R_{ivn}$, $G_{ivn}$, and $B_{ivn}$, which are obtained by multiplying a 100% reflectance distribution or transmittance distribution or an energy distribution that defines 100% in the measured wavelength range by the sensitivity functions and integrating the respective values, $R_{ivn}$ indicates the value representing the pseudo color, red.

Also, of the values $R_{ivn}$, $G_{ivn}$, and $B_{ivn}$, which are obtained by multiplying the 100% reflectance distribution or transmittance distribution or the energy distribution that defines 100% in the measured wavelength range by the sensitivity functions and integrating the respective values, $G_{ivn}$ indicates the value representing the pseudo color, green.

Furthermore, of the values $R_{ivn}$, $G_{ivn}$, and $B_{ivn}$, which are obtained by multiplying the 100% reflectance distribution or transmittance distribution or the energy distribution that defines 100% in the measured wavelength range by the sensitivity functions and integrating the respective values, $B_{ivn}$ indicates the value representing the pseudo color, blue.

Also, in the Equations (5) to (7), Kl, Ka, and Kb, respectively, indicate constants. In the present system, in order for a subject colored by pseudo colors to be viewed by human eyes through a display, it may be considered that just the path from display color emission to the human eyes need to be considered. Therefore, Kl, Ka, and Kb may be determined, respectively, in accordance with human sensation and regardless of the subject and thus consequently, may normally be the same as the factors for the visible range. However, there may be cases where examination of a higher level is to be performed, that is, a color specification system which has correlation with the sensitivity functions may be considered and examinations may be carried out without considering that a human will view the final image. Thus, in this case, the above-mentioned constants may be determined in accordance with the sensitivity functions.

Here, the power factor is set to 1/3 and made the same as Equations (2) to (4) since the relationship between luminance (a physical quantity) and lightness (a human psychophysical quantity) of object colors can be expressed by this power factor in substantially all cases in the visible range. Also, The principal method of use of this invention's system is to observe an invisible object while showing it on a display and displaying and recording the color values, and a visible-range color relationship exists between the displayed pseudo colors and the human eyes. Therefore, the present inventors considered that the use of a power factor of 1/3 as it is to be effective.

As with the above description, the present inventors also consider that the above-mentioned power factor can be used in expressing the relationship between luminance (a physical quantity) and lightness (a human psychophysical quantity) of object colors.

The present inventors also consider the use of the above-mentioned power factor to be effective in cases where sensation indices (sensation functions) of animals besides humans or sensation indices (sensation functions) of an inorganic form are handled.

Also, in this color specification process, in the case where invisible absorption color images (signals) based on absorption are determined and these are used to form a pseudo color image based on absorption in the image forming process as was described above using Fig. 4, the invisible absorption color images (signals) based on absorption (for example, $-\log R_{iv}$, $-\log G_{iv}$, and $-\log B_{iv}$) or the pseudo absorption color image $RGB_{iv}\varepsilon$ based on absorption may be used in place of $R_{iv}$, $G_{iv}$, and $B_{iv}$ or $RGB_{iv}$ (ST9).

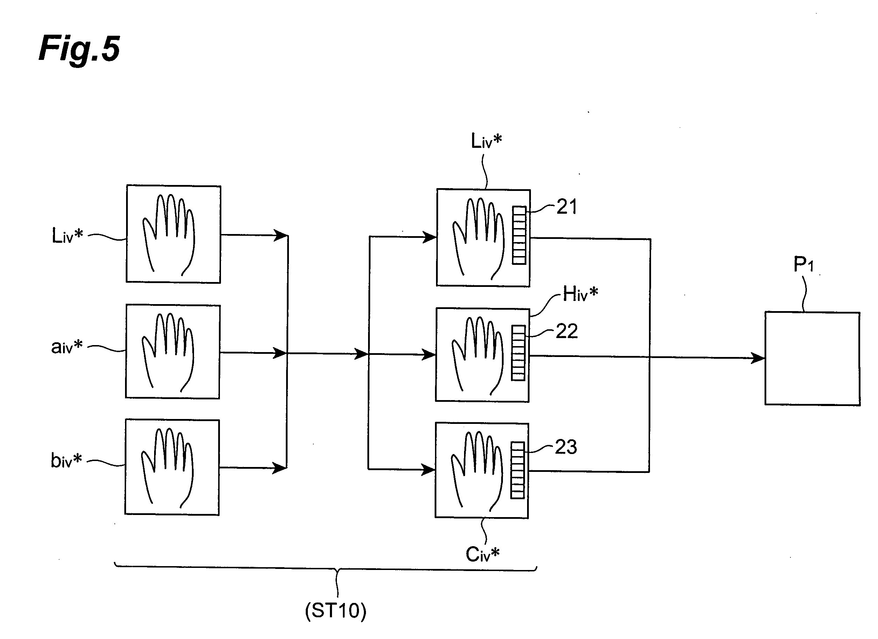

Furthermore, in this color specification process, $L_{iv}^*$, $a_{iv}^*$, and $b_{iv}^*$, expressed by Equations (5) to (7) may be used to calculate numerical values $H_{iv}^0$ and $C_{iv}^*$, defined by the following Equations (8) and (9) and these may be used along with $L_{iv}^*$ as another set of numerical values on the color solid of the pseudo color image $RGB_{iv}$ as shown in Fig. 5 (ST10). That is, expression in terms of $L_{iv}^*$ (lightness), $H_{iv}^*$ (hue), and $C_{iv}^*$ (saturation) is also possible. Also, in place of $C_{iv}^*$ (saturation), a numerical value $S_{iv}^*$, defined by the following Equation (10) may be used as the saturation.

$$H_{iv}^{\;*} = \tan^{-1}(b_{iv}^{\;*}/a_{iv}^{\;*}) \tag{8}$$

$$C_{iv}^{\;*} = (a_{iv}^{\;*2} + b_{iv}^{\;*2})^{\frac{1}{2}} \tag{9}$$

$$S_{iv}^{\;*} = C_{iv}^{\;*}/L_{iv}^{\;*} \tag{10}$$

The above-described color specification process differs from methods used in chemical spectroscopic analysis and is equivalent to using, from among light intensities, integral amounts (for example, the $R_{iv}$, $G_{iv}$, and $B_{iv}$ values) of light intensities of the wavelength ranges to be determined as a basis to express the energy amounts of these light intensities in a simple, solid form using scalar amounts, such as the ratios, $r_{iv} = R_{iv}/(R_{iv} + G_{iv} + B_{iv})$ and $g_{iv} = G_{iv}/(R_{iv} + G_{iv} + B_{iv})$, and the $G_{iv}$ value. By deformation of these solid information, modification to display in terms of $L_{iv}^*$, $a_{iv}^*$, and $b_{iv}^*$ is made possible and expression in other scalar values, such as $L_{iv}^*$ (lightness), $H_{iv}^*$ (hue), and $C_{iv}^*$ (saturation), is furthermore enabled as mentioned above.

$L_{iv}^*$ (lightness) indicates the lightness in a principal central wavelength region, $C_{iv}^*$ (saturation) indicates how much an arbitrary wavelength component intensity protrudes characteristically with respect to a gray line (that is, the average lightness line of $R_{iv}$, $G_{iv}$, and $B_{iv}$), and furthermore, $H_{iv}^*$ (hue) indicates the direction of inclination, among all directions, expressed by the three energies. In the visible range, this signifies the hue, such as red, orange, yellow, green, blue, indigo, and purple, and the same applies in the invisible range.

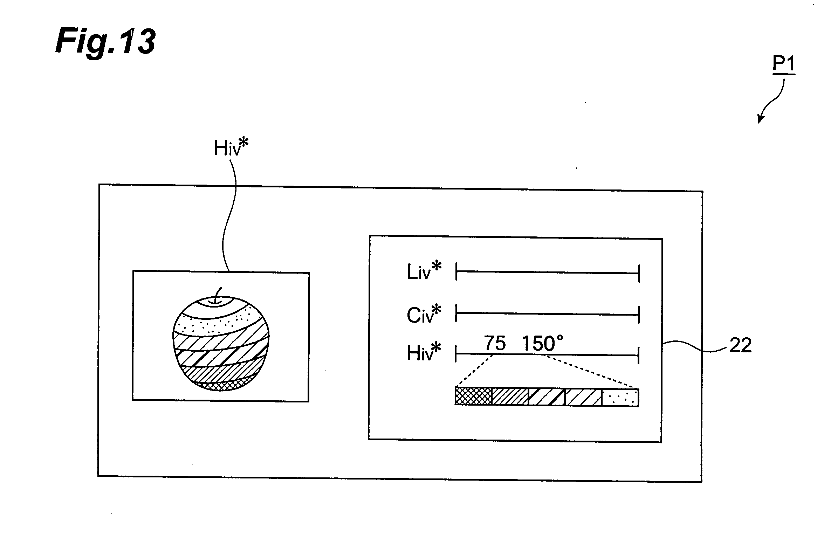

Also, since $L_{iv}^*$ (lightness), $H_{iv}^*$ (hue), and $C_{iv}^*$ (saturation) are monochromatic images, a so-called pseudo color image may be formed for any one of them and this may be output as image P1 to the monitor 5 and/or printer 6. Furthermore, as shown in Fig. 5, for $L_{iv}^*$, $H_{iv}^*$, and $C_{iv}^*$, which are pseudo color images, pseudo color bars 21, 22, and 23, which indicate the density information of any value of $L_{iv}^*$, $H_{iv}^*$, and $C_{iv}^*$ may furthermore be displayed (see Fig. 13).

The image P1, which is output to the monitor 5 and/or printer 6, shall now be described. In the image P1, in addition to the above-mentioned pseudo color image $RGB_{iv}$ or $RGB_{iv}\varepsilon$, various optical spectra of the subject, a table of the numerical data of $L_{iv}^*$, $a_{iv}^*$, $b_{iv}^*$, $H_{iv}^*$, $C_{iv}^*$, $r_{iv}$, $g_{iv}$, etc., two-dimensional or three-dimensional graphs of the numerical data of $L_{iv}^*$, $a_{iv}^*$, $b_{iv}^*$, $H_{iv}^*$, $C_{iv}^*$, $r_{iv}$, $g_{iv}$, etc., may be displayed suitably in combination. Also, in regard to the pseudo color image $RGB_{iv}$ or $RGB_{iv}\varepsilon$, an entire image of the subject and an image of a partial region may be displayed independently of each other. Furthermore, a normal visible light image may be displayed in combination with a pseudo color image.

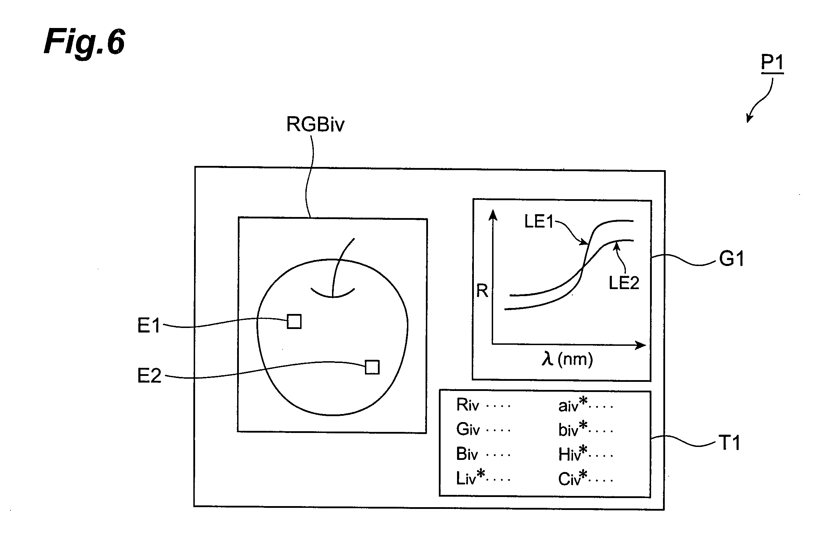

As an example of the image P1 to be output to the monitor 5 and/or printer 6, the pseudo color image $RGB_{iv}$, an optical spectrum graph G1 showing profiles LE1 and LE2 of reflectance R at partial regions E1 and E2 of the subject, and a table T1 of the numerical data of $L_{iv}^*$, $a_{iv}^*$, $b_{iv}^*$, $H_{iv}^*$, $C_{iv}^*$, $r_{iv}$, $g_{iv}$, etc., may be displayed in combination as shown in Fig. 6.

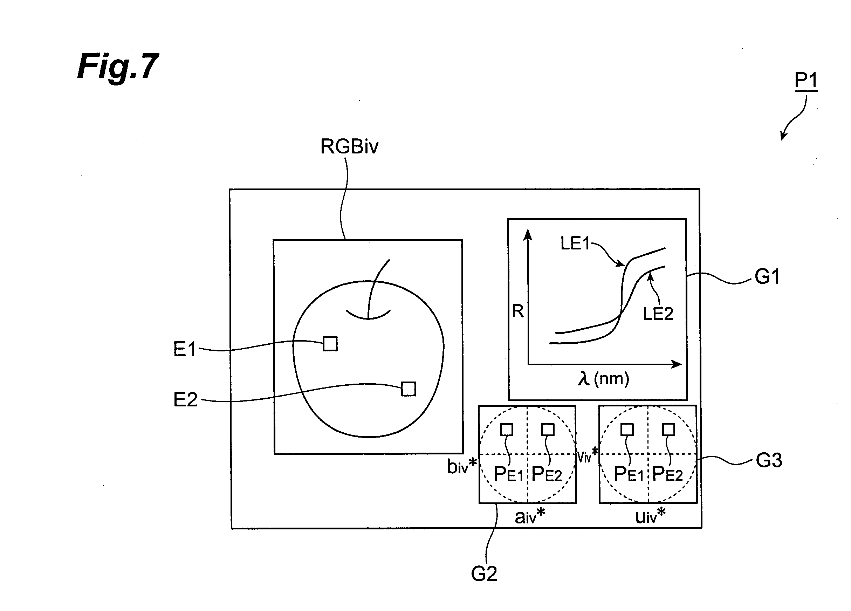

As an example of the image P1 to be output to the monitor 5 and/or printer 6, the above-mentioned $RGB_{iv}$, the graph G1, a two-dimensional graph G2 of $a_{iv}^*$ and $b_{iv}^*$ (wherein a coordinate point PE1 and a coordinate point PE2, which are based on partial regions E1 and E2 of the subject, are plotted), and a two-dimensional graph G2 of $u_{iv}^*$ and $v_{iv}^*$ (wherein a coordinate point PE1 and a coordinate point PE2, which are based on partial regions E1 and E2 of the subject, are plotted) may be displayed in combination as shown in Fig. 7.

Here, "$u_{iv}^*$" indicates the $u_{iv}^*$ among $L_{iv}^*$, $u_{iv}^*$, and $v_{iv}^*$, which have been modified from CIE 1976 L*u*v* in the same manner as the method of modifying to $L_{iv}^*$, $a_{iv}^*$, and $b_{iv}^*$ from the above-mentioned visible color specification system, CIE L*a*b*. Also, "$v_{iv}^*$" indicates the $v_{iv}^*$ among $L_{iv}^*$, $u_{iv}^*$, and $v_{iv}^*$, which have been modified from CIE 1976 L*u*v* in the same manner as the method of modifying to $L_{iv}^*$, $a_{iv}^*$, and $b_{iv}^*$ from the above-mentioned visible color specification system, CIE L*a*b*.

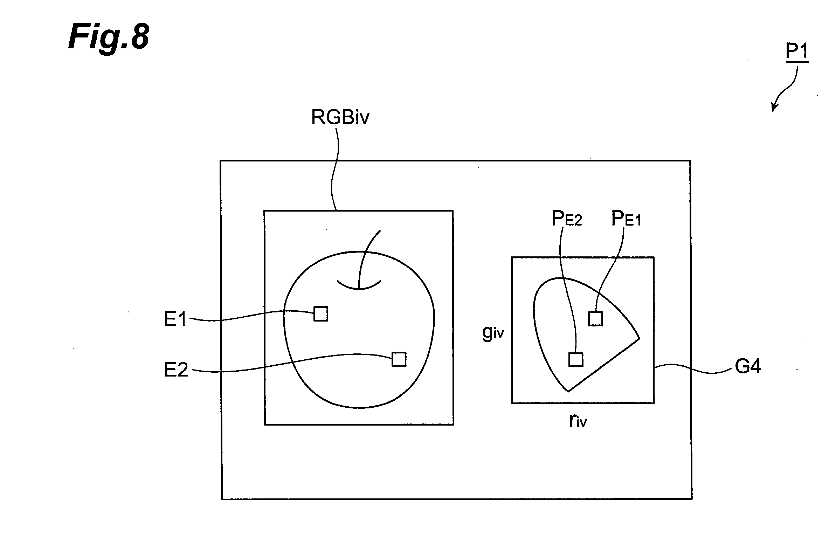

Furthermore, as an example of the image P1 to be output to the monitor 5 and/or printer 6, the pseudo color image $RGB_{iv}$ and graph G4 of $r_{iv}$ and $g_{iv}$ may be displayed in combination as shown in Fig. 8.

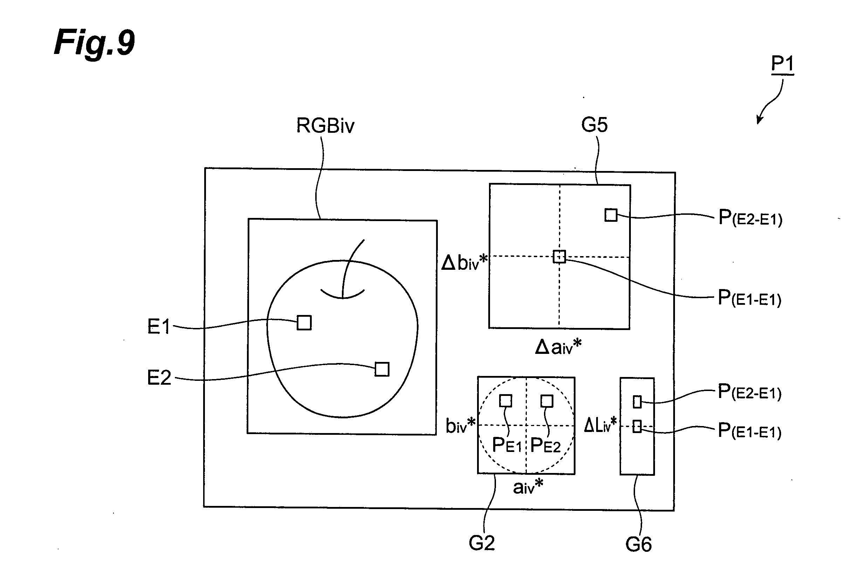

Also, as an example of the image P1 to be output to the monitor 5 and/or printer 6, the above-mentioned $RGB_{iv}$, the graph G2, a two-dimensional graph G5 of $\Delta a_{iv}^*$ and $\Delta b_{iv}^*$ (wherein a coordinate point $P_{(E1 - E1)}$ and a coordinate point $PE_{(E2 - E1)}$, which are based on partial regions E1 and E2 of the subject, are plotted), and a one-dimensional graph G6 of $\Delta L_{iv}^*$ (wherein a coordinate point $P_{(E1 - E1)}$ and a coordinate point $PE_{(E2 - E1)}$, which are based on partial regions E1 and E2 of the subject, are plotted) may be displayed in combination as shown in Fig. 9.

Here, "$\Delta a_{iv}^*$" indicates the difference between two $a_{iv}^*$'s and "$\Delta b_{iv}^*$" indicates the difference between two $a_{iv}^*$'s.

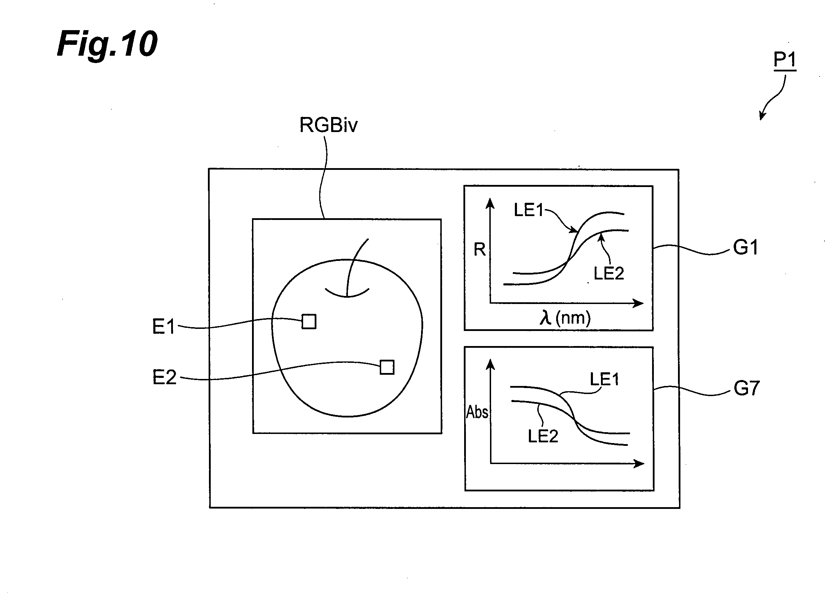

Also, as an example of the image P1 to be output to the monitor 5 and/or printer 6, $RGB_{iv}$, the graph G1, and an optical spectrum graph G1, showing profiles LE1 and LE2 of transmittance Abs in partial regions E1 and E2 of the subject, may be displayed in combination as shown in Fig. 10. In the case where the number of images that are taken in first is the minimum number of 3, though a broken line display for the number of wavelengths may be drawn as it is, a graph may instead be drawn upon increasing the number of data by performing spectral estimation.

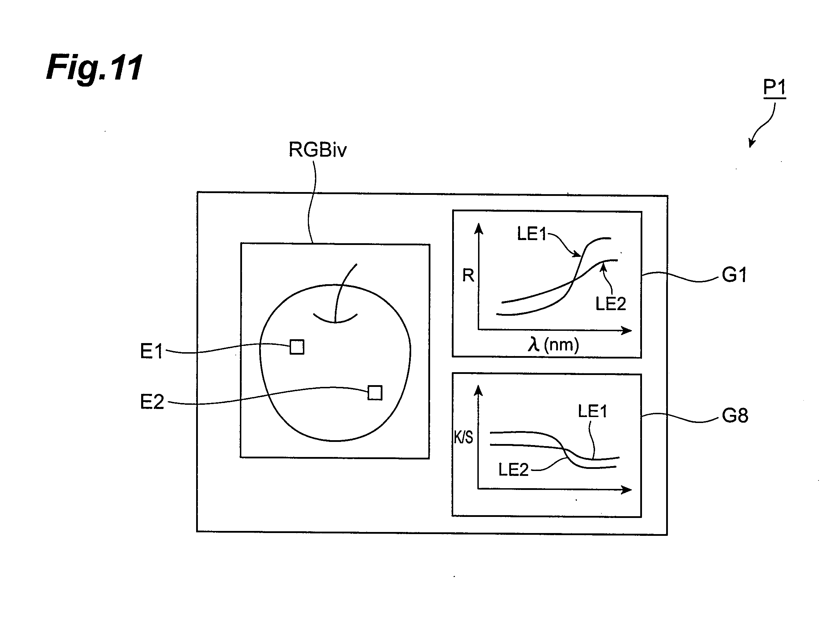

Furthermore, as an example of the image P1 to be output to the monitor 5 and/or printer 6, $RGB_{iv}$, the graph G1, and an optical spectrum graph G8, showing profiles LE1 and LE2 of K/S values in partial regions E1 and E2 of the subject, may be displayed in combination as shown in Fig. 11. Here, "K/S value" refers to (absorption coefficient) /(scattering coefficient).

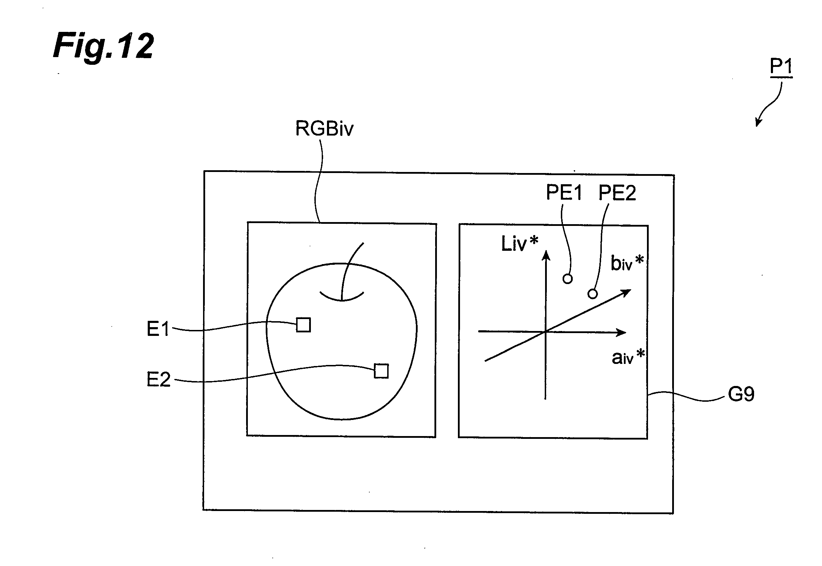

Also, as an example of the image P1 to be output to the monitor 5 and/or printer 6, a three-dimensional graph G9 of $L_{iv}^*$, $a_{iv}^*$, and $b_{iv}^*$ (wherein a coordinate point PE1 and a coordinate point PE2, which are based on partial regions E1 and E2 of the subject, are plotted) may be displayed as shown in Fig. 12.

Furthermore, as an example of the image P1 to be output to the monitor 5 and/or printer 6, a pseudo color image of $H_{iv}^*$ and a graph (pseudo color bar) 22, in which the density information of the $H_{iv}^*$ values are numerically quantified, may be displayed in combination as shown in Fig. 13.

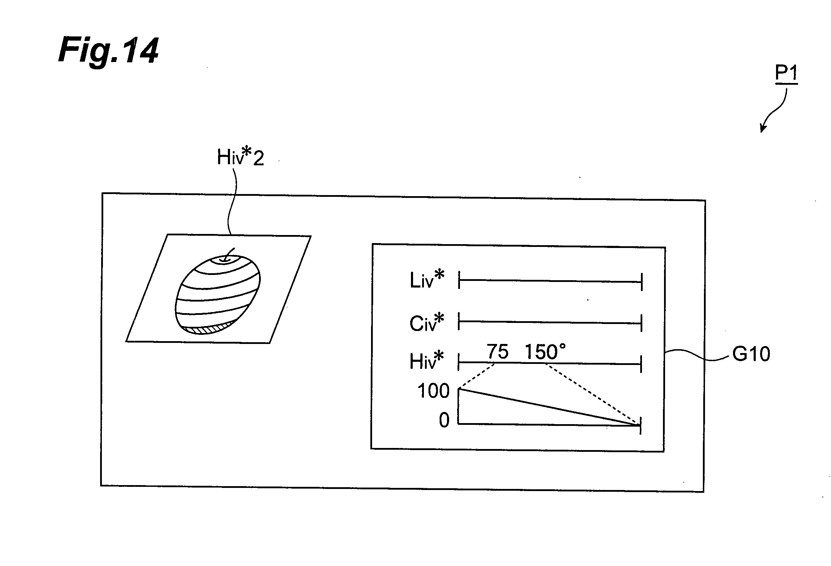

Also, as an example of the image P1 to be output to the monitor 5 and/or printer 6, a three-dimensional pseudo color image of $H_{iv}^*$ and a graph (pseudo color bar) G10, in which the density information of the $H_{iv}^*$ values are numerically quantified and the density information are displayed three-dimensionally, may be displayed in combination as shown in Fig. 14.

The coefficients $QR_{iv}$, $QG_{iv}$, and $QB_{iv}$ of the degrees of absorption, and modification to color density values $qr_{iv}$ and $qg_{iv}$ using these coefficients are also important. Here, "$QR_{iv}$" is equivalent to $-logR_{iv}$ and $(1 - R_{iv})^2/2R_{iv}$ and indicates the so-called absorbance image value of $R_{iv}$. Furthermore, "$QG_{iv}$" is equivalent to $-logG_{iv}$ and $(1 - G_{iv})^2/2G_{iv}$ and indicates the so-called absorbance image value of $G_{iv}$. Also, "$QB_{iv}$" is equivalent to $-logB_{iv}$ and $(1 - B_{iv})^2/2B_{iv}$ and indicates the so-called absorbance image value of $B_{iv}$.

Furthermore, "$qr_{iv}$" is the complementary chromaticity coordinate value with respect to the above-mentioned $r_{iv}$ value and indicates the value defined by the following equation. That is, $qr_{iv}$ is defined by $qr_{iv} = QR_{iv}/ (QR_{iv} + QG_{iv} + QB_{iv})$. Also, "$qg_{iv}$" is the complementary chromaticity coordinate value with respect to the above-mentioned $g_{iv}$ value and indicates the value defined by the following equation. That is, $qg_{iv}$ is defined by $qg_{iv} = QG_{iv}/ (QR_{iv} + QG_{iv} + QB_{iv})$.

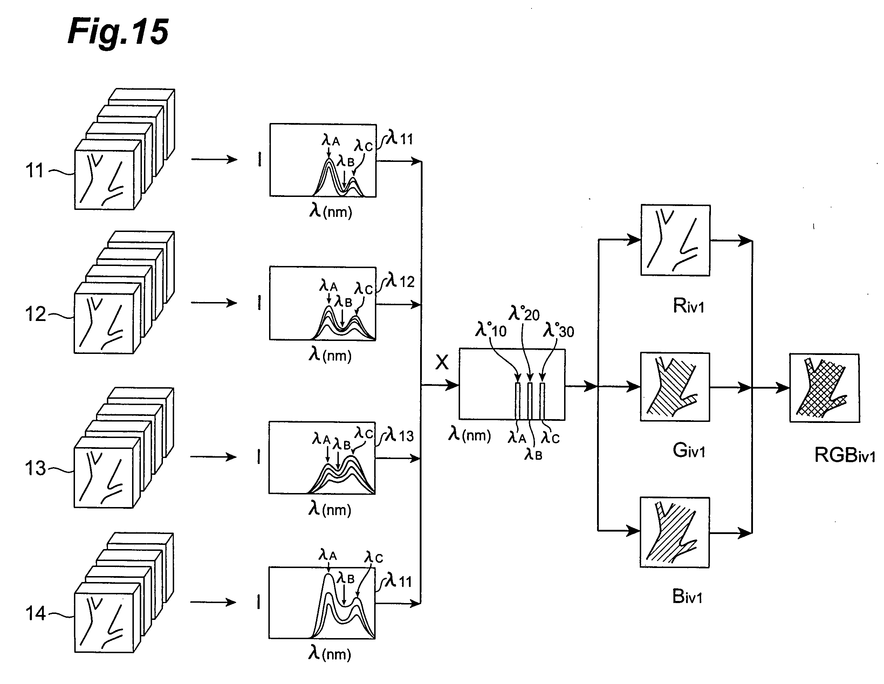

An example of a method of determining the optimal sensitivity functions to be used in image signal generation process in image processing part 4 shall now be described with reference to Fig. 15.

Though methods of displaying an image of a subject sample as a pseudo color image are known, a method of forming a pseudo color image using optimal sensitivity functions that are determined based on the information that are desired to be acquired from a subject sample has not been proposed heretofore. However, with this embodiment's system 1 enabling chromaticity measurement in the visible and invisible ranges, optimal sensitivity functions, which are determined based on the information that are desired to be acquired, are used in the image signal generation process at image processing part 4.

Sensitivity functions $\lambda^0_1$, $\lambda^0_2$, and $\lambda^0_3$, which are used in the image pickup system 1, are determined based on a correlation between physical state or chemical state differences to be observed that occur among respective subjects 10, making up a subject set comprising subjects 10 of the same type, and differences occurring among optical spectra of the respective subjects 10 making up the above-mentioned subject set. In this image pickup system 1, for example, optimal sensitivity functions may be determined in advance according to each subject for which an image is to be picked up, the data of these functions may be stored in the storage unit of the central control unit in image processing part 4, and a program that uses the data may be stored in a ROM. A program that determines the sensitivity functions may be stored in the above-mentioned ROM and the data of the determined optimal sensitivity functions may be stored in the storage device and used each time basic invisible color images (signals) + a pseudo color image are to be formed.

The method shown in Fig. 15 is a method in which optimal sensitivity functions are determined by considering human sight characteristics and human sensation characteristics in addition to the invisible range image information in order to clearly express the physical state or chemical state differences to be observed that occur among the respective subjects 10 that make up the subject set comprising the subjects 10 of the same type.

First, as shown in Fig. 15, the subject set, comprising a predetermined number of subjects, is divided into a number of clusters based on the physical state or chemical state differences to be observed among the respective subjects (ST11). At this state, rough optical spectra (optical spectra) of the individual subjects may be measured in advance and clustering may be performed in association with the physical state or chemical state differences to be observed in these rough data. Test results of the subject sample, such as the results of destructive tests or non-destructive tests, etc., may also be used in combination.

Here, a case where the subject set is divided into four clusters 11 to 14 shall be described. Optical spectra $\lambda 11$ to $\lambda 14$ (optical spectra, such as reflection spectra, transmission spectra, absorption spectra, etc.) of all wavelength ranges are, respectively, measured for the four clusters 11 to 14 (ST12). For the above-mentioned spectroscopic measurement, the image pickup system 1 may be used or another spectroscopic device may be used. Also, if for the subject, a correlation between the differences in waveform of the optical spectra of the respective subjects and the physical state or chemical state differences to be observed among the respective subjects is not seen with the entire image but the above-mentioned differences exist in a partial region within the entire image, optical spectra concerning that partial region are measured.

Then, based on optical spectra $\lambda 11$ to $\lambda 14$, initial sensitivity functions $\lambda^0_{10}$, $\lambda^0_{20}$, and $\lambda^0_{30}$, which serve as the initial models for determining optimal sensitivity functions $\lambda^0_1$, $\lambda^0_2$, and $\lambda^0_3$, are hypothesized (ST13). The optimal sensitivity functions $\lambda^0_1$, $\lambda^0_2$, and $\lambda^0_3$ are determined by modifying initial sensitivity functions $\lambda^0_{10}$, $\lambda^0_{20}$, and $\lambda^0_{30}$. More specifically, from the standpoint of ease of modification, bandpass-type functions are used as initial sensitivity functions $\lambda^0_{10}$, $\lambda^0_{20}$, and $\lambda^0_{30}$. The determination of the wavelength values of these functions is thus important.

As the wavelength values of the initial sensitivity functions $\lambda^0_{10}$, $\lambda^0_{20}$, and $\lambda^0_{30}$, characteristic wavelengths are selected from the spectral data of the optical spectra. Though in many cases, this characteristic wavelength value is a wavelength value for which the spectral intensity I takes on a maximum value or a minimum value, it is not restricted in particular as long as it is a value that reflects the physical state or chemical state differences to be observed among the respective subjects making up the subject set, and may be a wavelength value at a shoulder portion of an optical spectrum. By determining the above-mentioned wavelength values $\lambda_A$, $\lambda_B$, and $\lambda_C$, bandpass-type initial sensitivity functions $\lambda^0_{10}$, $\lambda^0_{20}$, and $\lambda^0_{30}$ are prepared.

The initial sensitivity functions $\lambda^0_{10}$, $\lambda^0_{20}$, and $\lambda^0_{30}$ are then applied to the optical spectra $\lambda 11$ to $\lambda 14$ to obtain basic invisible color images (signals) $R_{iv1}$, $G_{iv1}$, and $B_{iv1}$, and these are joined to prepare an initial pseudo color image $RGB_{iv1}$ (ST14).

That characteristics, which basically reflect the physical state or chemical state differences to be observed among respective subjects making up a subject set, are allocated to and expressed in the respective values of $R_{iv}$, $G_{iv}$, and $B_{iv}$, in the above described manner means that these characteristics determine the basic hues. The respective characteristics are thus represented by hues, and the levels or amounts thereof are represented by the darkness of color or more simply the saturation (more strictly speaking, the synthetic vector of lightness and saturation). As a result, even a spectrum of an invisible range can be expressed by pseudo colors in a characteristic state in terms of color.

After preparing $RGB_{iv1}$, the shapes of the initial sensitivity functions $\lambda^0_{10}$, $\lambda^0_{20}$, and $\lambda^0_{30}$, are suitably modified and adjusted while viewing this image (for example, intensity I or wavelength values $\lambda_A$, $\lambda_B$, and $\lambda_C$ may be changed). If an image that is recognizable in terms of color can be obtained at the stage of $RGB_{iv1}$, initial sensitivity functions $\lambda^0_{10}$, $\lambda^0_{20}$, and $\lambda^0_{30}$ will be optimal sensitivity functions $\lambda^0_1$, $\lambda^0_2$, and $\lambda^0_3$.

In modifying the shapes of the initial sensitivity functions $\lambda^0_{10}$, $\lambda^0_{20}$, and $\lambda^0_{30}$, first a Lorentz type function or a Gaussian distribution is assumed and the initial bandpass-type shapes are provided with a bulge. Care is required in providing this bulge, since if the bulge is increased more than necessary, the saturation differences will become low. Also, if the saturation differences are to be emphasized to increase the color selection ability, the saturation differences can be increased by providing negative characteristics at regions at which the respective bands intersect, that is, at regions at which the sensitivity functions overlap. The sensitivity characteristics are thus modified and adjusted while viewing the image.

In visualizing (applying pseudo colors to) an invisible range, since the visualized colors do not exist in nature, sensation characteristics equivalent to those of the visible range are preferably incorporated. For example, the relationship between cold colors and warm colors is kept to the relationship of bluish colors and reddish-orange colors as it is, and in cases where a natural object is the subject, a fresh object has a blue or green sensation in terms of hue while a decomposing object that is not fresh has a tannish, brownish, or reddish sensation. Thus, in the case where a natural object is the sample, the wavelength selection of the initial, bandpass-type sensitivity functions and the handling of $R_{iv}$, $G_{iv}$, and $B_{iv}$ are preferably in accordance with sensation characteristics equivalent to those of the visible range.

Since the determined sensitivity functions (characteristics) determine the value of the final invisible values ($R_{iv}$, $G_{iv}$, $B_{iv}$, $L_{iv}^*$, $a_{iv}^*$, and $b_{iv}^*$), the sensitivity functions must be specified each time. However, if the determined sensitivity functions are verified according to each sample and each wavelength used and become high in the frequency of use in the industry, the method of specification thereof will become simplified.

Furthermore, an optimal sensitivity function determination method will be a method by which the optimal sensitivity functions are determined without the involvement of human sensation. A method, wherein average vectors and principal component vectors are calculated using principal component analysis and these vectors are used as they are as the sensitivity functions, and a method, wherein optimized values, obtained by secondary conversion of the above-mentioned vectors, are used as the sensitivity functions, can be cited as examples.

Also, if as the pseudo color image information desired to be acquired, an image that is in accordance with the sight characteristics of an animal besides humans is required for example, sensitivity functions that are in accordance, for example, to the number of retinal cones and sight characteristics of the animal may be used as the optimal sensitivity functions. Preferably, values that are furthermore converted secondarily and optimized are used as the sensitivity functions.

Also, in regard to the sight characteristics of animals, optimal characteristics seem to have been selected over a long period of time. However, much redundancy in mathematical or spectroscopic terms is seen in many cases as well. Particularly in the case of humans, since in regard to the retinal cone characteristics, the characteristics of red cones and green cones are substantially close to each other, the regions thereof can be said to be high in redundancy mathematically. Meanwhile, in the above-mentioned case where the principal components contained in a subject are analyzed and the optimal sensitivity functions are determined mathematically, the redundancy can be minimized as much as possible and sensitivity functions can be prepared with which the mutual correlation among the numerical values calculated, respectively, using the sensitivity functions is as low as possible.

Consequently, even within just the visible range, the results will differ from the sight characteristics of humans. The same is considered to apply in invisible ranges to the sensitivity characteristics of an animal and those that are derived purely mathematically. Since both of these (the biological and the purely mathematical aspects) are important, sensitivity characteristics that take into consideration both aspects are consequently used.

Also, besides the above-described methods, there is the following method of determining the optimal sensitivity functions. That is, if the wavelength band of an optical spectrum of a subject on which pseudo colors are to be applied is, for example, an ultraviolet - visible - near infrared range of approximately 300 to 900nm, the desired pseudo color images can be formed from the original spectral distribution (optical spectrum) of the subject by determining optimal sensitivity functions having large wavelength widths, such as described above. However, in the case of preparing a pseudo color image of a subject, for which the optical spectrum is observed in the near infrared range (for example, a wavelength range of 800 to 2500nm) at a comparatively long wavelength side, a desired pseudo color image cannot be obtained readily in many cases from broad weighted functions (sensitivity functions), such as those described above, and the original spectral distribution.

That is, a near infrared range optical spectrum of a wavelength range of 800 to 2500nm has strong multicollinearity and the absorption by the respective substance components are, respectively, distributed over a wide wavelength range. Since a characteristic absorption spectrum is thus less likely to appear in comparison to visible range spectra, optical spectra (reflection spectra or absorption spectra) of subjects that are made up of the same types of substances will take on nearly the same shape and it will be difficult to determine optimal sensitivity functions by the method described using Fig. 15.

In this case, multiple linear regression (MLR) or principal component regression may be used to select wavelengths of high correlation with the information on the subject that are to be obtained (for example, the concentration of a specific component contained in the subject). In this case, in regard to the sampled image, an image of higher precision can be obtained by replacing the raw image with an absorption image or a second-order differentiation image.

In particular, this method tends to be effectively applicable to cases where the pseudo color image information that are to be obtained are limited to those for displaying, in a quantifiable manner, the concentrations of a specific substance contained in a subject.

Since from regression equations obtained by multiple linear regression, a concentration map (image) of the component to be obtained is obtained, this can be displayed as a pseudo color image of the concentrations of a single substance or concentration maps (images) can be obtained for three components, respectively, and these three images can be made to correspond to $R_{iv}$, $G_{iv}$, and $B_{iv}$, respectively, to provide a pseudo color display. It thus becomes possible to directly view an image created by the three components, and since a color solid positioning image can be formed from the images of the three components, analysis of a more advance level is enabled. In this case, the optimal functions become narrow in wavelength width, and for example when each image is sampled at a wavelength width interval of 2nm, the shortest wavelength width (2nm) tends to be selected in many cases.

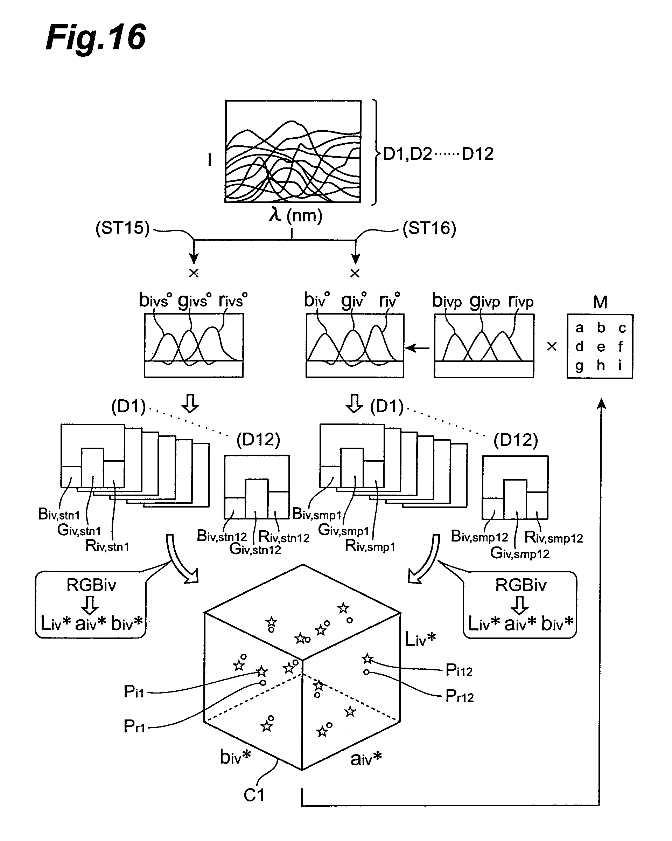

An example of a method of determining optimal matrix M to be used in the vector conversion process in image processing part 4 shall now be described with reference to Fig. 16.

First, no less than twelve spectra (referred to hereinafter as "standard spectra"), which are to serve as standards for a pseudo color image corresponding to the information desired to be obtained from a subject to be observed, are prepared. Each such standard spectrum is a spectrum of the same wavelength range as the above-mentioned optimal sensitivity functions and is a spectrum for forming chromaticity points that can be distributed uniformly in the color coordinate space of the color specification system that is employed (for example, the $L_{iv}*a_{iv}*b_{iv}*$ color specification system in the present embodiment).

Here, if the number of standard spectra is less than twelve, the tendency for color value calculation of high precision to be somewhat difficult becomes high. Also, from the standpoint of carrying out color value calculation of higher precision, the number of standard spectra is preferably no less than 18.

A case where twelve standard spectra are used shall be described here. First, each of these standard spectra D1 to D12 is multiplied by optimal sensitivity functions $b_{ivs}^0$, $g_{ivs}^0$, and $r_{ivs}^0$ (which correspond to the above-mentioned sensitivity functions $\lambda^0_1$, $\lambda^0_2$, and $\lambda^0_3$) to generate 12 sets of basic pseudo color image signals ($R_{iv,stn1}$, $G_{iv,stn1}$, $B_{iv,stn1}$) to ($R_{iv,stn12}$, $G_{iv,stn12}$, $B_{iv,stn12}$), which are to serve as standards. These are then used to carry out calculations indicated by the Equations (5) to (7) that were given above to determine twelve chromaticity points Pi1 to Pi12 that are distributed in color coordinate system C1 of the $L_{iv}*a_{iv}*b_{iv}*$ color specification system (ST15).

Sensitivity functions $b_{iv}^0$, $g_{iv}^0$, and $r_{iv}^0$ are then determined by applying matrix M (which is a 3-row by 3-column matrix the first time around) to physical sensitivity functions $b_{ivp}^0$, $g_{ivp}^0$, and $r_{ivp}^0$, obtained from spectroscopic optical part 2 (and corresponding to the n (n ≥ 3) digitized bandpass images (signals) $\lambda_{S1}$, $\lambda_{S2}$, ... $\lambda_{Sn}$ that were described above using Fig. 2). These sensitivity functions $b_{iv}^0$, $g_{iv}^0$, and $r_{iv}^0$ are then applied to each of standard spectra D1 to D12 to generate 12 sets of basic pseudo color image signals ($R_{iv,smp1}$, $G_{iv,smp1}$, $B_{iv,smp1}$) to ($R_{iv,smp12}$, $G_{iv,smp12}$, $B_{iv,smp12}$), and these are then used to carry out calculations indicated by the Equations (5) to (7) that were given above to determine twelve chromaticity points Pr1 to Pr12 that are distributed in color coordinate system C1 of the $L_{iv}*a_{iv}*b_{iv}*$ color specification system (ST16).

The values of matrix M in the above-mentioned (ST16) are then varied so that in color coordinate space C1, the color difference (color reproduction error) between chromaticity point Pi1 and chromaticity point Pr1, the color difference (color reproduction error) between chromaticity point Pi2 and chromaticity point Pr2, the color difference (color reproduction error) between chromaticity point Pi3 and chromaticity point Pr3, the color difference (color reproduction error) between chromaticity point Pi4 and chromaticity point Pr4, the color difference (color reproduction error) between chromaticity point Pi5 and chromaticity point Pr5, the color difference (color reproduction error) between chromaticity point Pi6 and chromaticity point Pr6, the color difference (color reproduction error) between chromaticity point Pi7 and chromaticity point Pr7, the color difference (color reproduction error) between chromaticity point Pi8 and chromaticity point Pr8, the color difference (color reproduction error) between chromaticity point Pi9 and chromaticity point Pr9, the color difference (color reproduction error) between chromaticity point Pi10 and chromaticity point Pr10, the color difference (color reproduction error) between chromaticity point Pi11 and chromaticity point Pr11, and the color difference (color reproduction error) between chromaticity point Pi12 and chromaticity point Pr12 will, respectively, take on minimum values. The optimal matrix M is thus determined. The values of matrix M may be determined by a known mathematical process, such as a least-squares method, etc.

As a method of determining M that differs from the above-described method, there is the PCA (principal component analysis) method. In principal component analysis in a subject, the creation of a new vector corresponds to creating an efficiently descriptive orthogonal vector (loading) in space and is thus basically the same in meaning as vector conversion by multiplication by matrix M. This method can thus be used as well.

[Second Embodiment]

A second embodiment of this invention's system enabling chromaticity measurement in the visible and invisible ranges shall now be described.

Besides changing the camera part 2 of the first embodiment's system 1 enabling chromaticity measurement in the visible and invisible ranges, shown in Fig. 1, by a different arrangement and furthermore providing a wavelength conversion part 7 between the spectroscopic optical part 2a and the photoelectric conversion part 2b, this second embodiment's system 1A enabling chromaticity measurement in the visible and invisible ranges has the same arrangement as the first embodiment's system 1 enabling chromaticity measurement in the visible and invisible ranges.

Wavelength conversion optical part 7 optically applies sensitivity functions to each of the three or more component lights, output by the spectroscopic optical part, by performing wavelength conversion on each of the three or more component lights and thereby generates three or more pseudo color component lights, respectively, corresponding to the three or more component lights.

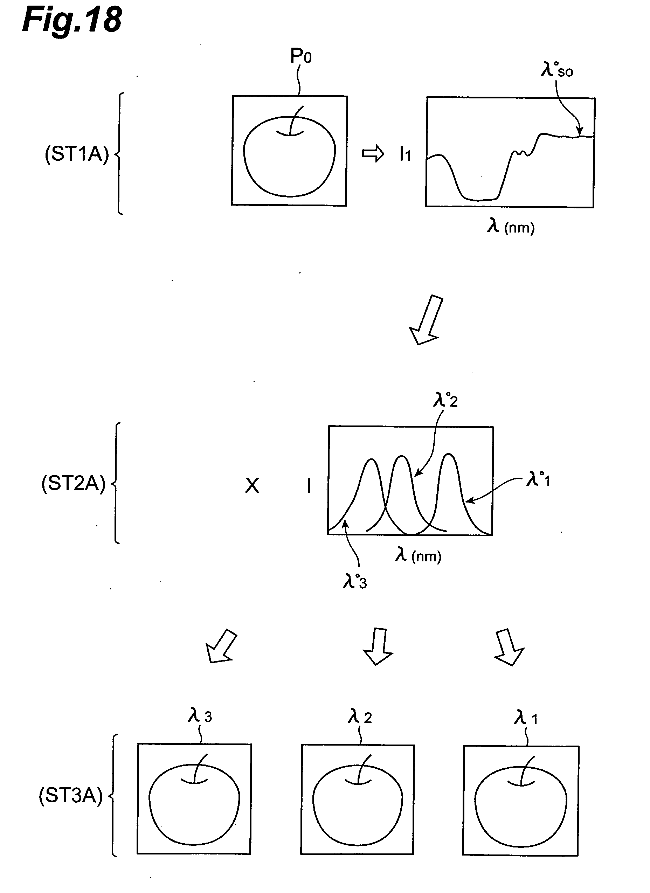

The operations of the second embodiment's system 1A enabling chromaticity measurement in the visible and invisible ranges shall now be described with reference to Fig. 18. Of the operations of this system 1A enabling chromaticity measurement in the visible and invisible ranges, only those operations that differ from those of the system 1 enabling chromaticity measurement in the visible and invisible ranges shall be described.

First, emitted light L1 of all wavelength ranges emitted from subject sample 10 is received by the spectroscopic optical part 2a. An entire image $P_0$ or a partial region E1 of subject sample 10 may be received as the image received at this point. A continuous emission spectrum $\lambda^0_{S0}$ of the received image is then decomposed, for example, into three component lights, respectively, having mutually different central wavelengths, by means of a spectroscopic prism (spectroscopic optical part 2a) that can spectrally divide the incident light into three (ST1A to ST2A).

The three component lights emitted from the spectroscopic prism are then subject to wavelength conversion by optical filters (wavelength conversion part 7), respectively, positioned at the three light emitting surfaces of the spectroscopic prism (ST2A). Here, the optical filters have optimal sensitivity characteristics $\lambda^0_{S1}$, $\lambda^0_{S2}$, and $\lambda^0_{S3}$, respectively, matched to the three component lights. The three component lights that are emitted from the spectroscopic prism are thus optically multiplied by the sensitivity functions and changed to three pseudo color component lights in being subject to the wavelength conversion.

The three pseudo color component lights are then, respectively, converted photoelectrically at the photoelectric conversion part 2b, and three basic pseudo color image signals $\lambda_1$, $\lambda_2$, and $\lambda_3$, corresponding to the three pseudo color component lights, are thereby formed (ST3A).

Though embodiments of this invention have been described in detail above, this invention is not limited to the above described embodiments.

Also, though in regard to the color specification process in the above-described embodiments, the case of using an "$L_{iv}*a_{iv}*b_{iv}*$ color specification system," defined based on the L*a*b* color specification system, as the color specification system was described with this invention's system enabling chromaticity measurement in the visible and invisible ranges, the color specification system to be used in the color specification process that is carried out at the image processing part is not restricted in particular, and a color specification system based on a color specification system besides the above-mentioned L*a*b* color specification system may be defined and used. For example, the Cieluv color specification system, Hunter Lab color specification system, AN40 color specification system, Munsell color specification system, Ostwald color specification system, Natural Color System (NCS) color specification system, etc., can be cited as color specification systems that can serve as a base, and a color specification system that is based on any of these (a color specification system that takes the place of the $L_{iv}*a_{iv}*b_{iv}*$ color specification system) may be defined and used.

Also, for example, in the above-described system 1 enabling chromaticity measurement in the visible and invisible ranges of the first embodiment, after replacing the input values of the component lights with absorbance values, sensitivity functions $\lambda^0_1$, $\lambda^0_2$, and $\lambda^0_3$ may be multiplied to determine the above-mentioned pseudo color image signals $-\log R_{iv}$, $-\log G_{iv}$, and $-\log B_{iv}$, which are based on absorbance, and pseudo color image $RGB_{iv}\varepsilon$, which is synthesized from these signals and is based on absorbance.

For example, though the sensitivity functions are normally determined based on a correlation between physical state or chemical state differences to be observed that occur among respective subjects that make up a subject set and differences in waveform occurring among optical spectra of the respective subjects making up the subject set, this invention is not limited thereto in particular.

For example, the sensitivity functions need not be just functions in the visible wavelength range, such as those shown in Fig. 19, but may instead be functions in a range of ultraviolet wavelengths that are shorter than visible wavelengths, in the visible range, and in a range of near infrared wavelengths that are longer than visible wavelengths. Also, the sensitivity functions may be functions that divide a wavelength range of certain width within the visible range into three regions and incorporate these regions as shown in Fig. 21. Also, the functions may have broad band characteristics as shown in Fig. 22.

Also, since generally a display is based on the three standard colors of RGB in many cases, the sensitivity functions are basically summarized as three functions as in the above description of the embodiments, three or more functions may be used depending on the color specification system used in the color specification process. For example, since there are cases where the four colors of red, yellow, green, and blue, etc., are used, the sensitivity functions may be summarized as four functions.

Though this invention's system enabling chromaticity measurement in the visible and invisible ranges shall now be described in more detail by way of examples and comparative examples, this invention by no means is restricted by these examples.

(Example 1)

A system enabling chromaticity measurement in the visible and invisible ranges having the same arrangement as that of the first embodiment, shown in Fig. 1, was arranged.

First, six types of black ballpoint pens and felt-tip pens (referred to hereinafter, respectively, as "SAS-S (M)," "Pigma," "Twin (T)," "Sharp H (M)," "Uni-Ball (M)," and "N-500 (Z)") were prepared, and images of samples, each prepared by solidly coloring a portion (of approximately 4cm$^2$) of a white paper using one of the inks, and samples (25cm$^2$ each) of three types of black formal wear fabric (referred to hereinafter, respectively, as "No. 1," "No. 2," and "No. 3") were taken using the above-mentioned system enabling chromaticity measurement in the visible and invisible ranges.

Here, "SAS-S (M)" indicates a product of the trade-name, "SAS-S," made by Mitsubishi Pencil Co., Ltd., "Pigma" indicates a product of the trade-name, "Nouvel Pigma Graphic," made by Sakura Color Products Corp., "Twin (T)" indicates a product of the trade-name, "Fude-pen Twin," made by Tombow Pencil Co., Ltd., "Sharp H (M)" indicates a product of the trade-name, "Uni 0.5 HB," made by Mitsubishi Pencil Co., Ltd., "Uni-Ball (M)" indicates a product of the trade-name, "Uni-Ball," made by Mitsubishi Pencil Co., Ltd., and "N-500 (Z)" indicates a product of the trade-name, "N-500," made by Zebra Co., Ltd.

An image of each sample was taken by the system enabling chromaticity measurement in the visible and invisible ranges, and an averaged reflectance value of a fixed area ($1cm^2$) was determined for a portion of each sample. The results are shown in Fig. 23 and Fig. 24.

As can be understood from the reflectance profile results of the respective samples that are shown in Fig. 23 and Fig. 24, in the visible range, the black inks of the respective pen samples and the respective black formal wear fabric samples exhibit low values of reflectance and are recognized as being gray. It was also found that among these samples, there exist samples that exhibit high reflectance in the near infrared range (SA-S (M), "Twin (T)," "N-500 (Z)," "No. 2," and "No. 3").

Using the above-mentioned system enabling chromaticity measurement in the visible and invisible ranges, color display of visible-range color images, which is a prior-art method, and color display of invisible range pseudo-color images by this invention's system enabling chromaticity measurement in the visible and invisible ranges were carried out for the respective samples.

Using the data of the reflectance profiles of the respective samples shown in Fig. 23 and Fig. 24, optimal sensitivity functions for color display of pseudo-color images were determined by the method described above using Fig. 15. The results are shown in Fig. 25. Also, using the optimal sensitivity functions shown in Fig. 25, a matrix M of the following Equation (11) was determined using the method described above using Fig. 16.

$$M = \begin{bmatrix} 1.031 & -0.111 & 0.080 \\ -0.051 & 1.070 & -0.020 \\ 0.070 & -0.050 & 0.979 \end{bmatrix} \quad \cdots \ (11)$$

Also, by applying matrix M, expressed by Equation (11), to the above-mentioned positive-only sensitivity characteristics shown in Fig. 25, the optimal sensitivity functions (ideal sensitivity characteristic values) shown in Fig. 26 were determined. Here, in the case of the system enabling chromaticity measurement in the visible and invisible ranges of the first embodiment, bandpass images (see Fig. 2), which are partitioned according to the corresponding wavelengths, can be captured by a spectroscopic imaging method.

Thus, by applying the optimal sensitivity functions (ideal characteristic values), shown in Fig. 26, to the respective bandpass images and integrating the respective image values, basic invisible color images ($R_{iv}$, $G_{iv}$, and $B_{iv}$) can be prepared directly without preparing raw invisible color images, a pseudo color image ($RGB_{iv}$) and invisible color value images ($L_{iv}^*$, $a_{iv}^*$, and $b_{iv}^*$) can be obtained and, at the same time in regard to values, the measured values for the respective pixels can be determined at the same time.

Also, in the case of an arrangement wherein sensitivity functions are applied optically by means of optical filters, etc., as in the system enabling chromaticity measurement in the visible and invisible ranges of the second embodiment, since just positive-only sensitivity characteristics can be provided as shown in Fig. 25, the following Equation (12) must be used to convert to the optimal sensitivity functions of Fig. 26. For reference, if the reverse operation is required for calculation, that is, if the positive-only sensitivity characteristics need to be calculated from the optimal sensitivity functions, this can be carried out using matrix "$M^{-1}$" shown in Equation (12) below. The values of (11) and (12) are matrix values that are effective for the present experimental results.

$$M^{-1} = \begin{bmatrix} 0.980 & 0.098 & -0.078 \\ 0.045 & 0.940 & 0.016 \\ -0.068 & 0.041 & 1.028 \end{bmatrix} \quad \cdots \ (12)$$

The numerical values for visible range color images and color display thereof were determined by calculation using the prior-art method. Furthermore, the numerical values for invisible range pseudo color images and color display thereof were determined by calculation using the optimal sensitivity functions shown in Fig. 26. The results are shown in Fig. 27, Fig. 28, and Fig. 29.

Fig. 27 shows a graph displaying the results of using data of the visible range (380 to 780nm) and using two-degree field isochromatic functions to carry out XYZ calculations and CIE Lab calculations. It was found that for all samples, the data tend to gather on the neutral axis (a* = 0, b* = 0) of the chromaticity coordinates. These images were displayed as being all black. The raw data of average values of these images are shown in Table 1.

Table 1

| Sample | L* | a* | b* | X | Y | Z | $R_{sRGB}$ | $G_{sRGB}$ | $B_{sRGB}$ |
|---|---|---|---|---|---|---|---|---|---|
| SAS-S(M) | 22.99 | 5.37 | -3.83 | 3.97 | 3.80 | 4.88 | 4.58 | 3.48 | 4.60 |
| Pigma (N) | 27.24 | 0.46 | 2.11 | 4.96 | 5.18 | 5.17 | 5.53 | 5.12 | 4.69 |
| Twin (T) | 30.59 | 0.76 | 3.19 | 6.23 | 6.48 | 6.25 | 7.11 | 6.38 | 5.63 |
| SharpH (M) | 40.80 | -0.01 | 1.09 | 11.16 | 11.74 | 12.36 | 11.95 | 11.72 | 11.29 |
| Uni-ball (M) | 32.81 | 0.41 | 2.41 | 7.12 | 7.45 | 7.44 | 7.93 | 7.38 | 6.74 |
| N-5000 (Z) | 29.18 | 8.06 | -1.88 | 6.34 | 5.91 | 6.91 | 8.03 | 5.22 | 6.45 |
| Fabric No. 1 | 17.98 | 0.07 | -0.11 | 2.39 | 2.51 | 2.75 | 2.52 | 2.51 | 2.53 |
| Fabric No. 2 | 9.87 | 4.18 | -6.67 | 1.18 | 1.11 | 1.83 | 1.20 | 1.02 | 1.78 |
| Fabric No. 3 | 23.27 | 1.65 | -3.39 | 3.80 | 3.88 | 4.89 | 3.90 | 3.80 | 4.59 |

The sRGB values of the color specification system for Internet, the XYZ values, and the L*a*b* values are shown in Table 1. As is clear from the results shown in Table 1, the respective samples have image data $R_{sRGB}$, $G_{sRGB}$, and $B_{sRGB}$ values in the range of 0 to 11, which are extremely low with respect to the value of 255 for white, and are recognized as being practically black. Although slight differences in color density can be recognized, recognition of differences of color among the respective samples was impossible.

Fig. 28 shows the results using the data for 550 to 950nm and the ideal sensitivity characteristics shown in Fig. 26. Also, Equations (5) to (7) were used calculate the $L_{iv}^*$, $a_{iv}^*$, and $b_{iv}^*$ values. In this case, the differences among the near infrared range spectra can be recognized and the characteristics of the three types of numerical values ($L_{iv}^*$, $a_{iv}^*$, and $b_{iv}^*$) can be distinguished on the chromaticity coordinates.

Also, in this case, even from the pseudo color images obtained, "Sharp H (M)," "Pigma (N)," and "Uni-ball (M)" can be recognized as being the same in type and were displayed as black in the images. Furthermore, in this case, the two types of "SAS-S (M)" and "N-5000 (Z)" were displayed with yellow of an extremely high saturation. Also, "Twin (T)" was displayed in brilliant red. It was thus possible to make clear distinctions with numerical values and with the colors of the images. The raw data of the images are shown in Table 2.

Table 2

| Sample | $L_{iv}^*$ | $a_{iv}^*$ | $b_{iv}^*$ | $R_{iv}$ | $G_{iv}$ | $B_{iv}$ | $\lambda_1$ | $\lambda_2$ | $\lambda_3$ |
|---|---|---|---|---|---|---|---|---|---|
| SAS-S(M) | 65.21 | 13.06 | 67.39 | 38.30 | 34.31 | 4.79 | 36.05 | 34.70 | 5.66 |
| Pigma (N) | 29.19 | 4.27 | 3.79 | 6.31 | 5.91 | 5.09 | 6.25 | 5.91 | 5.13 |
| Twin (T) | 37.98 | 115.04 | 12.32 | 33.63 | 10.08 | 6.58 | 34.06 | 8.97 | 8.30 |
| SharpH (M) | 41.51 | -0.60 | 2.97 | 12.09 | 12.18 | 11.12 | 12.01 | 12.21 | 11.14 |
| Uni-ball (M) | 34.86 | 4.11 | 4.09 | 8.91 | 8.43 | 7.30 | 8.84 | 8.43 | 7.36 |
| N-5000 (Z) | 74.04 | 18.08 | 69.90 | 53.62 | 46.77 | 7.77 | 50.71 | 47.21 | 9.03 |
| Fabric No. 1 | 17.96 | 1.19 | 1.14 | 2.57 | 2.51 | 2.36 | 2.56 | 2.51 | 2.37 |
| Fabric No. 2 | 9.24 | 202.87 | -6.92 | 24.22 | 1.03 | 1.60 | 24.96 | -0.14 | 3.21 |
| Fabric No. 3 | 22.95 | 163.97 | -2.52 | 29.24 | 3.79 | 4.23 | 30.04 | 2.50 | 6.00 |

Fig. 29 shows the results using the data for 550 to 950nm and the ideal sensitivity characteristics shown in Fig. 26. Also, Equations (5) to (7) were used to calculate the $L_{iv}^*$, $a_{iv}^*$, and $b_{iv}^*$ values. The following settings were used in Equations (5) to (7): Kl = 1, ka = 1, and kb = 1. The pseudo color images were the same as those of Fig. 28. The raw data of these images are shown in Table 3.

Table 3

| Sample | $L_{iv}^*$ | $a_{iv}^*$ | $b_{iv}^*$ | $R_{iv}$ | $G_{iv}$ | $B_{iv}$ | $\lambda_1$ | $\lambda_2$ | $\lambda_3$ |
|---|---|---|---|---|---|---|---|---|---|
| SAS-S(M) | 70.01 | 5.22 | 67.39 | 38.30 | 34.31 | 4.79 | 36.05 | 34.70 | 5.66 |
| Pigma (N) | 38.95 | 1.71 | 3.79 | 6.31 | 5.91 | 5.09 | 6.25 | 5.91 | 5.13 |
| Twin (T) | 46.54 | 46.02 | 12.32 | 33.63 | 10.08 | 6.58 | 34.06 | 8.97 | 8.30 |
| Shar pH (M) | 49.57 | -0.24 | 2.97 | 12.09 | 12.18 | 11.12 | 12.01 | 12.21 | 11.14 |
| Uni-ball (M) | 43.85 | 1.64 | 4.09 | 8.91 | 8.43 | 7.30 | 8.84 | 8.43 | 7.36 |
| N-5000 (Z) | 77.62 | 7.23 | 69.90 | 53.62 | 46.77 | 7.77 | 50.71 | 47.21 | 9.03 |
| Fabric No. 1 | 29.27 | 0.47 | 1.14 | 2.57 | 2.51 | 2.36 | 2.56 | 2.51 | 2.37 |
| Fabric No. 2 | 21.76 | 81.15 | -6.92 | 24.22 | 1.03 | 1.60 | 24.96 | -0.14 | 3.21 |
| Fabric No. 3 | 33.58 | 65.59 | -2.52 | 29.24 | 3.79 | 4.23 | 30.04 | 2.50 | 6.00 |

Clear distinction among the respective samples could be made in the present case as well. Also, with the pseudo color images, the samples, which were all displayed in black in the visible range, could be displayed in a distinguishing manner as pseudo color images of the different colors of black, yellow and red. It was thus found that using such a method, problems of distinguishing falsification of characters, etc., can be solved as well.

A comparison of the results of Fig. 28 and Fig. 29 shows that the $a_{iv}^*$ values of Fig. 28 are distributed more widely than the $a_{iv}^*$ values of Fig. 29. This is due to the difference of Equations (2) to (4) and Equations (5) to (9), that is, the use of 500 as the factor for determining a* in the visible range equations and the use of 200 as the factor (Ka) for determining the $a_{iv}^*$ of the invisible range equations, and the $a_{iv}^*$ values determined using visible range Equations (2) to (4) are simply elongated by 2.5 times.

In regard to this, there are the following two lines of thought. First, since the invisible range is a range that cannot be seen with the eyes, the application of factors suited to the eyes (116 as L*, 200 as b*, and 500 as a*) can be said to be meaningless. However, the following can also be said. That is, second, if the light amount proportions in the invisible range are to be considered as colors, these can be understood more readily by allocation to pseudo colors as described above.

The basic philosophy behind this is that energy amounts in the invisible range are converted to pseudo colors for viewing by humans through an RGB display. In this case, even if the energy values are those of the invisible range, once they are converted into pseudo colors, since these pseudo colors are to be viewed by humans, they must be considered in line with how humans see. It can thus be considered that it is better to use color difference equations (color display equations) that are the same as those of the visible range.

Thus, though Equations (5) to (7) are based on the invisible range and inorganic standard values (200 in both) are basically used, in Equation (3), the factors, Kl, Ka, and Kb are incorporated to accommodate for both lines of thought (that is, the consideration of the invisible range just in the form of internal calculation equations or the consideration of color values premised on viewing by humans upon conversion from the invisible range to the visible range once).

Besides changing the samples from pens to formal wear fabrics, Fig. 30, Fig. 31, and Fig. 32 are graphs arranged in the same manner as Fig. 27, Fig. 28, and Fig. 29, respectively. As can be seen from Fig. 30, Fig. 31, and Fig. 32, though the samples can only be recognized as being practically black in the visible range, when the invisible chromaticity coordinates are used, the samples of "No. 3" and "No. 2" exhibit red chromaticity values. Also, in regard to the pseudo color images, whereas as a garment prepared using the sample of "No. 1" is displayed as black, the sample of "No. 3" is displayed as being red in color and the sample of "No. 2" is displayed as being red of higher saturation than the sample of "No. 3."

It was thus found that items, for which evaluation of slight differences in the visible range and other essential quality evaluations cannot be made readily with a visible color system, can be displayed as clearly distinguishable pseudo color images by the system of this invention.

**Industrial Applicability**

With this invention's system enabling chromaticity measurement in the visible and invisible ranges, information that are desired to be acquired from a subject sample can be adequately evaluated quantitatively using invisible range color values and color display of a pseudo color image.

**Claims**

1. A system enabling chromaticity measurement in the visible and invisible range, the system comprising at least:

   a spectroscopic optical part for receiving emitted light of all wavelength ranges emitted from a subject sample and spectrally separating the emitted light into three or more component lights having mutually different central wavelengths;
   a photoelectric conversion part for photoelectrically converting the three or more component lights, respectively, and generating three or more electric signals, respectively, corresponding to the three or more component lights;
   an image processing part for processing the three or more electric signals to generate a pseudo color image of the sample and compute a numerical value defined based on a color specification system for performing color display of the pseudo color image; and
   an image outputting part for outputting the pseudo color image and/or the numerical value,
   the image processing part comprising at least:

      image signal generation processing means for generating three or more basic pseudo color image signals by applying three or more sensitivity functions independently to all of the three or more electric signals, respectively;
      vector conversion processing means for generating the three or more pseudo color image signals by performing vector conversion by applying a matrix M to the three or more basic pseudo color image signals;
      image formation processing means for generating the pseudo color image by synthesizing the three or more pseudo color image signals; and
      color specification processing means for computing the numerical value defined based on the color specification system by use of the three or more pseudo color image signals,
      the three or more sensitivity functions being determined based on a correlation between physical state or chemical state differences to be observed that occur among respective subjects constituting a subject set to which the subject sample belongs, and differences in waveform occurring among optical spectra of the respective subjects constituting the subject set, and
      the matrix M being a matrix for approaching optimal sensitivity characteristic and being determined so that, in consequence, the color reproduction error that is generated when generating the three or more pseudo color image signals is minimized.

2. A system enabling chromaticity measurement in the visible and invisible range, said system comprising at least:

   a spectroscopic optical part for receiving emitted light of all wavelength ranges emitted from a subject sample and spectrally separating the emitted light into three or more component lights having mutually different central wavelengths;
   wavelength conversion optical parts which are provided, respectively, for each of said three or more component lights and generates three or more pseudo color component lights corresponding to the three or more component lights respectively by performing wavelength conversion of each of the three or more component lights and thereby optically applying sensitivity functions to each of the three or more component lights;
   a photoelectric conversion part for photoelectrically converting the three or more pseudo color component lights respectively and thereby generating three or more basic pseudo color image signals respectively corresponding to the three or more pseudo color component lights;
   an image processing part for processing the three or more basic pseudo color image signals to generate a pseudo color image of the sample and compute a numerical value defined based on a color specification system for performing color display of the pseudo color image; and
   an image outputting part for outputting the pseudo color image and/or the numerical value,
   the image processing part comprising at least:

      vector conversion processing means for generating the three or more pseudo color image signals by performing vector conversion by applying a matrix M to the three or more basic pseudo color image signals;
      image formation processing means for generating the pseudo color image by synthesizing the three or more pseudo color image signals; and

color specification processing means for computing the numerical value defined based on said color specification system by use of the three or more pseudo color image signals;

the three or more sensitivity functions being determined based on a correlation between physical state or chemical state differences to be observed that occur among respective subjects constituting a subject set to which the subject sample belongs, and differences in waveform occurring among optical spectra of the respective subjects constituting the subject set, and

the matrix M being a matrix for approaching optimal sensitivity characteristic and being determined so that, in consequence, the color reproduction error that is generated when generating the three or more pseudo color image signals is minimized.

3. The system enabling chromaticity measurement in the visible and invisible range according to Claim 1 or 2, the system enabling to output a pseudo color image generated for an entire image of the subject sample and a pseudo color image generated for a partial region image of the subject sample respectively and independently to the image outputting part.

4. The system enabling chromaticity measurement in the visible and invisible range according to any one of Claims 1 to 3, the system enabling to output an optical spectrum measured for an entire image of the subject sample and optical spectra measured for a partial region image of the subject sample respectively and independently to the image outputting part.

5. The system enabling chromaticity measurement in the visible and invisible range according to any one of Claims 1 to 4, the system enabling to output the numerical value computed for an entire image of the subject sample and the numerical value computed for a partial region image of the subject sample respectively and independently in the form of a table or a graph to the image outputting part.

6. The system enabling chromaticity measurement in the visible and invisible range according to any one of Claims 1 to 5, the system enabling to measure a color value of arbitrary point of an interior or a surface of the subject sample.

EP 1 530 033 A1

Fig.1

Fig.2

EP 1 530 033 A1

24

# Fig.3

EP 1 530 033 A1

# Fig.4

(ST7)

Riv        -logRiv

(ST8)

RGBivε

Giv

Biv

-logGiv     -logBiv

(ST9)

EP 1 530 033 A1

Fig.5

EP 1 530 033 A1

Fig.6

Fig.7

RGBiv

E1
E2

LE1
R
LE2
λ (nm)
G1

biv*
P_{E1} P_{E2}
aiv*

viv*
P_{E1} P_{E2}
uiv*

G3

G2

P1

EP 1 530 033 A1

EP 1 530 033 A1

## Fig.8

P1

RGBiv

$P_{E2}$   $P_{E1}$

E1

E2

$g_{iv}$

$r_{iv}$

G4

# Fig.9

EP 1 530 033 A1

**Fig.10**

Fig.11

EP 1 530 033 A1

*Fig.12*

P1

RGBiv

PE1 PE2

Liv*

biv*

E1

E2

aiv*

G9

EP 1 530 033 A1

EP 1 530 033 A1

Fig.13

P1

Hiv*

Liv* ├────────────────┤

Civ* ├────────────────┤

Hiv* ├──75  150°──────┤

22

Fig.14

EP 1 530 033 A1

# Fig.15

EP 1 530 033 A1

# Fig.16

Fig.17

# Fig.18

## Fig.19

z  y  x

100    400    700    1000

## Fig.20

λ°so

λ3    λ2    λ1

100    400    λ    700    1000

# Fig.21

# Fig.22

## Fig.23

## Fig.24

## Fig.25

## Fig.26

## Fig.27

## Fig.28

## Fig.29

## Fig.30

## Fig.31

## Fig.32

**INTERNATIONAL SEARCH REPORT**

| International application No. |
| --- |
| PCT/JP03/09410 |

**A. CLASSIFICATION OF SUBJECT MATTER**
Int.Cl$^7$ G01J3/46, G06T1/00, H04N1/04, H04N1/60, H04N9/04

According to International Patent Classification (IPC) or to both national classification and IPC

**B. FIELDS SEARCHED**

Minimum documentation searched (classification system followed by classification symbols)
Int.Cl$^7$ G01J3/46-3/51, G01J1/02, G01J1/42, G01J5/48,
G01D7/00-7/10, G06T1/00, G09G5/02, A61B1/00-1/04,
H04N1/028, H04N1/04, H04N1/60, H04N7/18, H04N9/04

Documentation searched other than minimum documentation to the extent that such documents are included in the fields searched
| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 62-182705 A (Olympus Optical Co., Ltd.), 11 August, 1987 (11.08.87), Page 4, lower left column, line 1 to page 5, upper left column, line 3; Fig. 5 (Family: none) | 1-6 |
| A | JP 2002-171519 A (UTEC Corp.), 14 June, 2002 (14.06.02), Full text; Figs. 1 to 7 (Family: none) | 1-6 |
| A | JP 2000-171301 A (Hochiki Corp.), 23 June, 2000 (23.06.00), Full text; Figs. 1 to 10 (Family: none) | 1-6 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 04 November, 2003 (04.11.03) | 18 November, 2003 (18.11.03) |

| Name and mailing address of the ISA/<br>Japanese Patent Office | Authorized officer |
| --- | --- |
| Facsimile No. | Telephone No. |

Form PCT/ISA/210 (second sheet) (July 1998)

**INTERNATIONAL SEARCH REPORT**

International application No.

PCT/JP03/09410

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-328392 A (Konica Corp.),<br>30 November, 1999 (30.11.99),<br>Full text; Figs. 1 to 9<br>(Family: none) | 1-6 |
| A | JP 6-121325 A (Nippon Hoso Kyokai),<br>28 April, 1994 (28.04.94),<br>Full text; Figs. 1 to 4<br>(Family: none) | 1-6 |
| A | JP 63-234941 A (Olympus Optical Co., Ltd.),<br>30 September, 1988 (30.09.88),<br>Full text; Figs. 1 to 68<br>& US 4959710 A          & DE 3740318 A1 | 1-6 |

Form PCT/ISA/210 (continuation of second sheet) (July 1998)